# EUROPÄISCHE PATENTSCHRIFT

(11) **EP 2 781 880 B1**
(45) Veröffentlichungstag und Bekanntmachung des Hinweises auf die Patenterteilung: **16.01.2019**
(21) Anmeldenummer: 13160069.4
(22) Anmeldetag: 19.03.2013
(51) Int. Cl.: G01C 15/00

(54) **Konstruktionslasersystem mit zumindest teilweise automatisch ablaufender Rekalibrierungsfunktionalität für eine Strahlhorizontierfunktionalität**
Construction laser system with at least partially automatic recalibration functionality for a beam leveling function
Système de laser de construction comportant une fonctionnalité de recalibrage s'exécutant de manière au moins partiellement automatique pour une fonctionnalité de mise à l'horizontale du rayon

(43) Veröffentlichungstag der Anmeldung: 24.09.2014
(73) Patentinhaber: Leica Geosystems AG, 9435 Heerbrugg (CH)
(72) Erfinder: Fessler, Thilo, A-6971 Hard (AT); Stöckel, Bernd, CH-9445 Rebstein (CH); Ammer, Thomas, CH-9443 Widnau (CH)
(74) Vertreter: Kaminski Harmann

(56) Entgegenhaltungen:
- EP-A1- 2 144 037
- EP-A1- 2 199 739
- US-A- 5 689 330
- US-A- 6 043 874

## Beschreibung

Die Erfindung betrifft ein Konstruktionslasersystem für Arbeiten im Bau- und/oder Innenausbau, aus Rotationslaser und Laserreceiver, mit hinsichtlich Bereitstellungsaufwand und Ausführungsgeschwindigkeit verbesserter Funktionalität zur Bestimmung einer Richtung in der sich der Laserreceiver aus Sicht des Rotationslasers befindet. Ferner betrifft die Erfindung ein entsprechendes Verfahren mit Rotationslaser und Laserreceiver, wobei in verbesserter Weise ein Bestimmen der Richtung, in der sich der Laserreceiver aus Sicht des Rotationslasers befindet, erfolgt, sowie ein Computerprogrammprodukt zur Ausführung dieses Verfahrens.

Es ist bekannt, auf Baustellen z.B. von Gebäuden oder bei Strassenbau- und/oder Erdbauarbeiten Rotationslaser einzusetzen. Insbesondere werden Rotationslaser eingesetzt, in denen ein durch eine Lasereinheit emittierter Laserstrahl (im sichtbaren oder infraroten Wellenlängenbereich) durch Ablenkung über ein rotierendes Umlenkprisma eine Bezugsfläche erzeugt, durch die dann eine präzise Ebenenreferenz (insbesondere eine Höhenreferenz im Fall einer horizontalen Ebene) bereitgestellt wird.

Viele der heute existierenden Rotationslaser weisen dabei eine Strahl-Selbsthorizontierfunktionalität (auch bekannt als Self-Levelling) auf. Zur Erfüllung einer solchen Strahl-Selbsthorizontierfunktionalität sind verschiedene technische Lösungen bekannt, die zwar sowohl rein mechanischer Art sein können, sich heute jedoch meist auf Sensorik optischer Art stützen. Beispielsweise kann das insbesondere die Lasereinheit und das drehbare Umlenkprisma umfassende Herzstück des Rotationslasers (d.h. das Laser-Core-Modul) pendelnd aufgehängt sein, sodass eine Horizontalitätstreue unter Ausnutzung der Gravitation erzeugt werden kann. Das Laser-Core-Modul kann vorteilhaft dabei jedoch um zwei Achsen (zumindest geringfügig in einem Bereich von z.B. ±5°) motorisiert präzise neigbar an einem äusseren Gehäuse des Geräts aufgehängt sein und mit einem Neigungssensor bzw. Horizontierungssensor ausgestattet sein, dessen Anzeige bzw. Signal ausgelesen und als Ausgangsgrösse für eine aktive Änderung der Neigungsstellung des Laser-Core-Moduls benutzt werden kann.

Je nach Ausbaustufe weisen bekannte Rotationslaser heute dabei auch eine Funktion (mit entsprechender Mechanik, Sensorik und Steuerung) zur gezielten, gewünschten Neigung der Laserebene relativ zur Horizontalen in einer oder zwei Richtungen auf. Dafür kann das insbesondere die Lasereinheit und das drehbare Umlenkprisma umfassende Herzstück des Rotationslasers gezielt motorisiert um eine Achse oder um zwei Achsen geneigt und in gewünschte Neigungsstellungen gebracht werden, sodass damit auch die Rotationsachse und folglich auch die aufgespannte Ebene gewünscht geneigt wird. Entsprechende Mechanismen, Sensoriken und Steuerungen dafür sind im Stand der Technik hinlänglich bekannt und z.B. in den Patentliteratur-Publikationen US 5,485,266 A, US 2004/ 0125356 A1, EP 1 790 940 A2, EP 1 901 034 A2, EP 2 327 958 A1 und EP 2 522 954 A1 beschrieben.

Wird dabei der durch den Rotationslaser emittierte rotierende Laserstrahl im sichtbaren Spektrum ausgesendet und trifft dieser auf eine Fläche wie z.B. eine Wand, einen Boden oder eine Decke des Gebäudes, ist dort eine Bezugslinie als Basis für weitere Maßnahmen sichtbar.

Zum präzisen Übertragen der durch den rotierenden Laserstrahl angegebenen Bezugsebene bzw. Bezugshöhe z.B. auf eine Wand oder ins Gelände sind handhaltbare Laserempfänger (auch Laserreceiver genannt) bekannt, die eine Position relativ zu einer durch den Rotationslaser aufgespannten Referenzfläche hochgenau bestimmen und indizieren können.

Aus dem Stand der Technik bekannte handhaltbare Laserempfänger zur Bestimmung einer Position relativ zur Referenzfläche können dabei einen eine Vielzahl von photosensitiven Elementen umfassenden Laserstrahl-Detektor aufweisen, der zur Erzeugung eines Ausgangssignals bei Auftreffen des Laserstrahls auf dem Laserstrahl-Detektor ausgebildet ist. Im Detail ist dabei der Laserstrahl-Detektor meist so ausgebildet, dass zudem eine Auftreffposition des Laserstrahls auf der Laserstrahl-Detektor-Fläche abgeleitet werden kann, wofür die photosensitiven Elemente - betrachtet in aufrechter Betriebsstellung des Geräts - in einer vertikal ausgerichteten Sensorzeile aneinander gereiht sein können, sodass sich also der Laserstrahl-Detektor zumindest über einen eindimensionalen Bereich auf dem Laserreceiver erstreckt. Zudem sind meistens eine Auswerteeinheit zur Ermittlung der Position des Laserempfängers relativ zur durch den rotierenden Laserstrahl definierten Referenzhöhe anhand des Outputs des Laserstrahl-Detektors sowie ein Indikator für die ermittelte Position (etwa eine visuelle Anzeige), insbesondere ausgebildet zur Indikation, ob der Laserempfänger mit der Referenzfläche exakt koinzidiert, in das Laserempfängergerät integriert. Die Position kann dabei beispielsweise anhand eines Verhältnisses von mehreren Ausgangssignalen bestimmt werden (z.B. als Mittelpunkt jenes Teil-Bereichs auf der Laserstrahl-Detektor-Zeile, der durch den Laserstrahl beleuchtet wird).

Derartige handhaltbare Laserempfänger können insbesondere dann zum Einsatz kommen, wenn die durch den rotierenden Laserstrahl abgebildete Linie mit dem Auge nur schwer oder nicht präzise genug erkennbar ist. Dies ist z.B. der Fall etwa bei grösseren Entfernungen von Rotationslaser (z.B. begründet auf eine Divergenz des Laserstrahls [-> abgebildete Linie wird zu breit] oder eine geringe Lichtleistung [-> abgebildete Linie wird zu schwach sichtbar] (die aus Augensicherheitsgründen gewissen Begrenzungen unterliegt) und/oder eine hohe Umgebungshelligkeit) oder auch bei Verwendung von Laserlicht im nicht sichtbaren Wellenlängenbereich.

In solchen Fällen ist es anhand derartiger Laserempfänger nun ermöglicht, den Laserstrahl zu finden und die durch einen rotierenden Laserstrahl definierte Laserebene (bzw. Referenzhöhe) zu indizieren, abzulesen und die Höheninformation ins Gelände bzw. auf eine Wand (etc.) zu übertragen. Beispielsweise kann - indiziert durch den Laserempfänger - eine entsprechende Markierung in der Referenzhöhe angebracht werden.

Dafür wird benutzerseitig der Laserempfänger beispielsweise in vertikaler Richtung suchend auf und ab bewegt und schliesslich in jene Position gebracht, in welcher der Indikator eine Koinzidenz mit der Referenzfläche anzeigt. Beispielsweise kann als Indikator eine visuelle Anzeige vorgesehen sein, die (etwa durch Leuchtpfeile oder unterschiedlichfarbene LEDs) darüber informiert, ob sich ein definierter Nullpunkt des Laserempfängers (z.B. ein Flächenmittelpunkt der Detektorfläche)
□ exakt auf Höhe der Referenzfläche,
□ oberhalb der Referenzfläche oder
□ unterhalb der Referenzfläche
befindet.

Darüber hinaus kann als Indikation eine numerische Anzeige der relativen Position des Laserempfängers zur Referenzhöhe dienen, etwa in mm oder Zoll.

Beispiele für solche Laserempfänger sind in den Druckschriften EP 2 199 739 A1 und US 4,240,208 geoffenbart.

Um dem Benutzer ein einfaches Übertragen der durch den Laserempfänger ermittelten und indizierten Referenzhöhe bereitzustellen, kann am Gehäuse des Laserempfängers in Höhe des definierten Nullpunkts eine Höhenmarke vorgesehen sein (z.B. eine Kerbe oder eine aufgedruckte Linie seitlich am Gehäuse).

Für eine Reihe von bekannten Funktionen und Anwendungen eines Systems aus Rotationslaser (insbesondere Dual-Grade-Rotationslaser) und Laserreceiver kann zudem (z.T. zumindest grobe) Kenntnis über eine Laserreceiver-Richtung erforderlich oder zumindest hilfreich sein, d.h. Kenntnis über eine Richtung, in welcher sich der Laserreceiver aus Sicht des Rotationslasers befindet (z.B. bzgl. eines Rotationslaser-internen Koordinatensystems).

Beispiele für derartige Funktionen und Anwendungen können dabei sein Grade-Catch (auch Plane-Catch oder Slope-Catch genannt), Grade-Lock (auch Plane-Lock bzw. Slope-Lock genannt, ggf. mit Tracking) oder Axis-Alignment/Axis-Finding, wie sie dem Fachmann bekannt sind. Spezielle Aspekte und Ausführungsformen bzgl. dieser Funktionen sind zudem z.B. in den Patentliteratur-Publikationen US 6,055,046 A, US 6,314,650 B1 und US 6,693,706 B2 beschrieben.

Folgende Methoden sind beispielsweise dabei (unter anderem auch aus den im direkt vorherigen Abschnitt genannten Publikationen) für die Bestimmung einer Laserreceiver-Richtung in einem System aus Rotationslaser und Laserreceiver im Stand der Technik bekannt:
1) Auswertung eines direkt (in Echtzeit) nach receiverseitiger Detektion eines Strahls erzeugten Signals, das vom Receiver an den Rotator (z.B. per Funk) übertragen wird und Ableiten eines Emissionswinkels, in welchem der rotierende Laserstrahl wohl gerade zum Zeitpunkt des Auftreffens stand
2) Definiertes Neigen der Referenzebene um einen bekannten Neigungswert und laserreceiverseitiges Ablesen eines dadurch bewirkten Höhenversatzes des Beam-Strikes auf dem Detektor des Laserreceivers (mit Durchführung dieser Schritte für beide Neigungsachsen) und Ableiten einer Richtung zum Receiver anhand von der gegebenen Relation des jeweiligen Neigungswinkelunterschieds zum jeweiligen Höhenversatz auf dem Receiver.
3) Behaftung eines Strahlparameters der Laserstrahlung mit einer kontinuierlich winkelabhängig variierenden Information, die seitens des Receivers anhand des auftreffenden Strahls auslesbar ist und darüber die Richtung zum Receiver ableitbar macht.
4) Iterativ halbierendes Windowing anhängig von einem Treffen bzw. Nichttreffen des Laserreceivers im jeweils aktuellen Winkelbereichs-Fenster (z.B. Aussenden des Strahls nur im Winkelbereich von 0 - 180°, falls Receiver einen Treffer angezeigt hat: Aussenden des Strahls nur im Winkelbereich von 0 - 90°, falls Receiver bei 0 - 180° keinen Treffen angezeigt hat: Aussenden des Strahls nur im Winkelbereich von 180° - 270°, etc.).
Das Thema bzgl. einer Bestimmung der Laserreceiver-Richtung wird dabei unter anderem auch in der Patentliteratur-Publikation WO 2006/070009 A2 behandelt. Die US 5 689 330 A offenbart die automatische Kalibrierung einer Selbsthorizontierung mit Hilfe von sechs präzise zueinander ausgerichteten Laserempfängern.

Die Erfindung bezieht sich nun jedoch insbesondere auf die zuvor bereits erläuterte Strahlhorizontierfunktionalität von einem Rotationslaser, bei welcher das Laser-Core-Modul z.B. um zwei Achsen (zumindest geringfügig in einem Bereich von z.B. ±5°) motorisiert präzise neigbar an einem äusseren Gehäuse des Geräts aufgehängt ist und mit einem bzw. zwei Neigungssensoren bzw. Horizontierungssensoren ausgestattet ist, dessen Output als Ausgangsgrösse für eine aktive Änderung der Kippstellung des Laser-Core-Moduls benutzt werden kann.
Für die Strahlhorizontierfunktionalität wird werkseitig dabei eine Justierung und Kalibrierung vorgenommen, bei welcher in einem Speicher derartige Kalibrierdaten bezüglich eines Zusammenwirkens des Horizontierungssensors und des Kipp-Mechanismus abgelegt werden, dass über die Kalibrierdaten abhängig von einem Output des Horizontierungssensors der Mechanismus so definiert ansteuerbar und dadurch die Rotationsachse so gezielt kippbar ist, dass der rotierende Laserstrahl auch tatsächlich möglichst genau eine horizontale Ebene aufspannt.

Durch verschiedene äussere Einflüsse, wie beispielsweise Temperatur- und Feuchtigkeitsschwankungen oder mechanische Erschütterungen (wie Vibrationen), etc., kann sich die Justierung des Laserstrahls (z.B. wg. des Horizontierungssensors oder des Kippmechanismus) aber verändern. Daher ist es in regelmässigen Abständen oder im Bedarfsfall wünschenswert, die Ebenen- bzw. Horizontalitätstreue des rotierenden Laserstrahls und seiner Strahl-Selbsthorizontierfunktionalität zu überprüfen und ggf. neu zu kalibrieren.

Für eine Rekalibrierung des Rotationslasers sind dabei verschiedenste Methoden bekannt, die stets dabei nur rein manuell durchgeführt werden können und oft individuell durch einen Benutzer je nach persönlicher Vorliebe bzw. persönlichen Kenntnissen, Geschicke und Fähigkeiten selbst gewählt und definiert sind.

Zudem sind für eine Rekalibrierung des Rotationslasers spezielle Kalibrierfernrohre bekannt, wie eines z.B. in der Europäischen Patentanmeldung mit der Nummer EP 12195754.2 beschrieben ist, die in der Praxis aufgrund des damit verbundenen Aufwands oft jedoch nur für werksseitige Rekalibrierungen zum Einsatz kommen.

Aufgabe der Erfindung ist es, eine Möglichkeit zur verlässlichen, einen Mindest-Standard erfüllenden Rekalibrierung der Strahlhorizontierfunktionalität eines Rotationslasers bereitzustellen, wobei die Rekalibrierung dennoch möglichst vergleichsweise einfacher und/oder mit vergleichsweise weniger - insbesondere keinem - Rekalibrier-Sonderzubehör ausführbar ist, und dies insbesondere unabhängig von der Fachkunde bzw. den Kenntnissen, Geschicke und Fähigkeiten eines Gerätebenutzers. Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.
Das die Erfindung betreffende Konstruktionslasersystem umfasst mindestens einen eine Lasereinheit und ein fortlaufend drehbares Umlenkmittel aufweisenden Rotationslaser zur Emission eines um eine Rotationsachse rotierenden Laserstrahls derart, dass der rotierende Laserstrahl eine Referenzfläche definiert, sowie einen Laserreceiver mit einem zumindest sich über einen eindimensionalen Bereich auf dem Laserreceiver erstreckenden positionssensitiven Laserstrahl-Detektor, sodass der Laserreceiver ausgebildet ist zur Erzeugung eines Ausgangssignals abhängig von einer Auftreffposition des Laserstrahls auf dem Laserstrahl-Detektor.
Der Rotationslaser ist dabei ferner ausgestattet mit einer kalibrierten Strahlhorizontierfunktionalität, insbesondere eine Strahl-Selbsthorizontierfunktionalität, und weist dafür auf
□ einen Horizontierungssensor,
□ einen Mechanismus zum zumindest geringfügigen Kippen der Rotationsachse relativ zu einer Stehbasis des Rotationslasers sowie
□ einen Speicher mit derartigen Kalibrierdaten bezüglich eines Zusammenwirkens des Horizontierungssensors und des Mechanismus, dass über die Kalibrierdaten abhängig von einem Output des Horizontierungssensors der Mechanismus so definiert ansteuerbar und dadurch die Rotationsachse so gezielt kippbar ist, dass der rotierende Laserstrahl eine horizontale Ebene aufspannt.

Zudem umfasst das Konstruktionslasersystem eine Auswerte- und Steuereinheit und Kommunikationsmittel zur Übertragung des Ausgangssignals vom Laserreceiver an die Auswerte- und Steuereinheit.

Gemäss der Erfindung ist nun eine zumindest teilweise durch die Auswerte- und Steuereinheit automatisch ablaufende Rekalibrierungsfunktionalität für die Strahlhorizontierfunktionalität vorgesehen, anhand welcher die Strahlhorizontierfunktionalität auf ihre Güte automatisch überprüft und insbesondere ggf. die gespeicherten Kalibrierdaten automatisch upgedatet werden können.

Dafür ist für die Rekalibrierungsfunktionalität ein Ablauf von N, mit N grösser oder gleich drei, Kalibrierungsmessungen definiert, die in einer jeweiligen I-ten, mit I fortlaufend aus eins bis N, azimutalen Ausrichtung der Stehbasis und in dabei unveränderter Lage des Laserreceivers mit dem Rotationslaser und dem Laserreceiver auszuführen sind. Vorbereitend ist der Laserreceiver dabei beabstandet von Rotationslaser derart aufzustellen, dass ein durch den Rotationslaser grob horizontal emittierter rotierender Laserstrahl auf dem Laserstrahl-Detektor des Laserreceivers auftrifft.

Erfindungsgemäss erfolgt nun im Rahmen der Rekalibrierungsfunktionalität für jede I-te der N Kalibrierungsmessungen automatisch gesteuert durch die Auswerte- und Steuereinheit folgendes:
□ der Rotationslaser emittiert - unter Anwendung der Strahlhorizontierfunktionalität - den rotierenden Laserstrahl und
□ es wird in einem Ausgangssignal-Empfangsmodus ein über die Kommunikationsmittel eingehendes Ausgangssignal durch die Auswerte- und Steuereinheit erfasst und als I-tes Ausgangssignal gespeichert.

Das jeweilige Ändern der azimutalen Ausrichtungen des Rotationslasers zwischen den Messungen kann dabei beispielsweise durch einen Benutzer erfolgen, z.B. geführt durch ein visuelles oder akustisches Benutzerleitsystem, das etwa am Rotationslaser vorgesehen sein kann (wie etwa eine Anzeige etc.). Auf diese Aspekte wird weiter unten nochmals näher eingegangen.

Ferner liest die Auswerte- und Steuereinheit automatisch aus den jeweiligen I-ten Ausgangssignalen die entsprechenden I-ten Auftreffpositionen aus, wertet diese paarweise mit den jeweiligen I-ten azimutalen Ausrichtungen korreliert aus und Überprüft anhand dieser Auswertung die Güte der Strahlhorizontierfunktionalität (d.h., ob die durch den rotierenden Laserstrahl emittierte Ebene tatsächlich die gewünschten, definierten Anforderungen an die Horizontalität erfüllt). Bei Nichterfüllen oder auch bei schlechtem Erfüllen der Anforderungen können die für die Strahlhorizontierfunktionalität gespeicherten Kalibrierdaten dann automatisch durch die Auswerte- und Steuereinheit upgedatet werden.

Dieses durch die Steuer- und Auswerteeinheit erfolgende Auslesen und Auswerten der jeweiligen I-ten Ausgangssignale bzw. der jeweiligen I-ten Auftreffpositionen kann z.B. - ab Abschluss der zweiten Kalibriermessung - nach jeder weiteren erfolgten Kalibriermessung (oder in einem definierten Rhythmus, oder erst nach Beendigung der letzten Kalibriermessung, etc.) durchgeführt werden. Erfolgt dies nach jeder Kalibriermessung, so können in einer Weiterbildung z.B. nach Ansammlung einer im konkreten Fall derart ausreichenden Anzahl von I-ten Auftreffpositionen, dass die tatsächliche Neigung gegenüber der Horizontalen von der durch den rotierenden Laserstrahl erzeugten Ebene hinreichend genau bestimmbar ist bzw. der Bestimmtheitsgrad/die Genauigkeit für die Bestimmung der Ebenenneigung bei weiterer Ansammlung nicht mehr weiter verbessert wird (Standardabweichung bleibt konstant), der Ablauf von Kalibriermessungen und somit eine weitere Ansammlung beendet sowie daraufhin die gespeicherten Kalibrierdaten upgedatet werden.

Der Ablauf der N Kalibrierungsmessungen für die Rekalibrierungsfunktionalität kann im Allgemeinen derart definiert sein, dass die jeweiligen I-ten azimutalen Ausrichtungen zumindest eine Menge von fix vorgegeben verschiedenen azimutalen Ausrichtungen der Stehbasis relativ zu einer Richtung, in der sich der Laserreceiver aus Sicht des Rotationslasers befindet, abdecken.

In einer weiteren Ausbaustufe kann das Konstruktionslasersystem dabei zudem über eine Richtungsbestimmungsfunktionalität verfügen (wie Beispiele dafür aus dem Stand der Technik bekannt sind, oder wie eine solche etwa in der Europäischen Patentanmeldung mit der Nummer EP13160068.6 beschrieben ist), anhand von welcher eine aktuelle Richtung zum Laserreceiver aus Sicht des Rotationslasers als Laserreceiver-Richtung bestimmbar ist.

Die in der Europäischen Patentanmeldung mit der Nummer EP13160068.6 beschriebene Richtungsbestimmung erfolgt dabei nach dem Prinzip eines Digitalwinkelcodes mit mehreren Spuren, wobei die mehreren Spuren über mehrere Drehdurchgänge des rotierenden Laserstrahls erzeugt bzw. abgebildet werden.

Für diesen Fall der Verfügbarkeit einer Richtungsbestimmungsfunktionalität kann nun im Rahmen der Rekalibrierungsfunktionalität für jede I-te der N Kalibrierungsmessungen automatisch gesteuert durch die Auswerte- und Steuereinheit unter Anwendung der Richtungsbestimmungsfunktionalität eine I-te Laserreceiver-Richtung bestimmt und jeweils darüber die I-te azimutale Ausrichtung des Rotationslasers relativ zu der Laserreceiver-Richtung abgeleitet werden.

Für den Ablauf der Kalibriermessungen können dann beliebige Ausrichtungen der Stehbasis des Rotationslasers gewählt werden, die jeweils anhand von der Richtungsbestimmungsfunktionalität im Rahmen des Ablaufs der Rekalibrierung für jede I-te Messung mitbestimmt werden.

Es wird somit also eine beliebige Wahl der jeweiligen I-ten azimutalen Ausrichtung ermöglicht. Beispielsweise können so auch asymmetrisch oder zufällig über den Umfang verteilte azimutale Ausrichtungen zur Anwendung kommen (insbesondere auch vorsätzlich/gezielt möglichst rotationsasymmetrisch verteilt, da hierfür z.B. die durch den rotierenden Laserstrahl aufgespannte Ebene mit einem hohen Bestimmtheitsgrad ermittelbar ist).

Alternativ kann jedoch der Ablauf der N Kalibrierungsmessungen für die Rekalibrierungsfunktionalität derart definiert sein, dass jede I-te azimutale Ausrichtung der Stehbasis relativ zu einer Richtung, in der sich der Laserreceiver aus Sicht des Rotationslasers befindet, fix vorgegeben ist.
Insbesondere kann dabei auch die Reihenfolge der im Rahmen der Kalibriermessungen nacheinander einzunehmenden azimutalen Ausrichtungen auch fix vorgegeben sein. Für einen solchen fix vorgegebenen Ablauf sind dabei nicht zwingend aktive Richtungsbestimmungen erforderlich.
Allerdings ist es dann vonnöten, dass der Benutzer zwischen den Messungen jeweils hinsichtlich der azimutalen Ausrichtung der Stehbasis hinreichend präzise und in der richtigen Abfolge umorientiert, sodass in der jeweils I-ten Kalibriermessung auch die richtige I-te Ausrichtung durch den Rotationslaser eingenommen ist. Die Toleranz hinsichtlich erforderlicher Genauigkeit der Einnahme der jeweiligen I-ten Ausrichtung kann dabei in der Praxis vergleichsweise hoch gesetzt sein, sodass diese im Allgemeinen auch bei einem durch einen wenig geschickten Benutzer erfolgenden Umorientieren gut eingenommen werden können. Je nach dem, wie präzise und verlässlich die Strahlhorizontierfunktionalität überprüft und kalibriert werden soll, können für die Einnahme der jeweiligen I-ten Ausrichtungen dabei z.B. Abweichungen von bis zu +-5° oder bis zu +- 2° toleriert werden. Für einen Standard-Benutzer ist es in der Praxis dabei bei Vorhandensein von fixen Ausrichtungs-Markierungen am Gehäuse des Rotationslasers ohne Weiteres möglich, das Gerät in der vorgegebenen markierten azimutalen Ausrichtung relativ zum Laserreceiver mit einer Genauigkeit von +-2° aufzustellen (geschickte Benutzer erreichen verlässlich dabei auch eine Genauigkeit von +-1°). Die kann erfolgen, indem das Gehäuse unter Anpeilung des entfernt aufgestellten Laserreceivers mit der vorhandenen Markierung entsprechend fein orientiert wird (d.h. um seine Stehachse schwenkend entsprechend fein umgestellt wird), bis die Markierung nach Augenmass genau in Richtung des Laserreceivers zeigt.

Gemäss eines weiteren Aspekts der Erfindung können der Ablauf mit N grösser oder gleich vier Kalibrierungsmessungen definiert sein und die dabei jeweils einzunehmenden azimutalen Ausrichtungen rotationssymmetrisch um den vollen Umfang von einer azimutalen Drehung der Stehbasis verteilt sein. Beispielsweise können im Spezielle der Ablauf mit N gleich genau vier Kalibrierungsmessungen definiert und die dabei jeweils einzunehmenden azimutalen Ausrichtungen jeweils um 90° beabstandet sein.

Wie eingangs im Rahmen der Erfindungsbeschreibung bereits erwähnt können ferner Ausgabemittel zur Ausgabe von visuellen oder akustischen Indikatoren vorgesehen sein, die durch die Auswerte- und Steuereinheit im Rahmen der Rekalibrierungsfunktionalität derart angesteuert werden, dass ein Benutzer anhand dessen durch den Ablauf von N Kalibrierungsmessungen geführt wird.

Insbesondere kann dies z.B. so erfolgen und programmiert sein, dass
- ein Indikator angezeigt wird zur Aufforderung des Benutzers zur Umstellung und Einnehmung der jeweiligen I-ten azimutalen Ausrichtung der Stehbasis,
- ein Indikator angezeigt wird als Angabe dafür, dass die jeweilige I-ten azimutalen Ausrichtung der Stehbasis hinreichend eingenommen ist und/oder dass eine automatisch Konstruktionslasersystem-seitig erfolgende Bestimmung der aktuell eingenommenen I-ten azimutalen Ausrichtung erfolgreich angeschlossen ist, und/oder
- nach Abschluss der jeweiligen I-ten Kalibriermessung ein Indikator angezeigt wird als Angabe dafür, dass
   □ die nächste (also (I+1)-te) azimutale Ausrichtung der Stehbasis eingenommen werden soll,
   □ alle N Kalibriermessungen abgeschlossen sind, insbesondere zudem mit ergänzender Angabe darüber, ob die gespeicherten Kalibrierdaten anhand der durchgeführten N Kalibriermessungen hinlänglich profund und mit hinlänglichem Bestimmtheitsgrad überprüft und ggf. mit hinreichender Genauigkeit, sodass die Strahlhorizontierfunktionalität eine vorgegebene Genauigkeitsanforderung erfüllt, upgedatet werden können.

Als Anzeige können beispielsweise am Rotationslaser angeordnete LED-Lampen (die z.B. mit unterschiedlichen Farben leuchten können und/oder in speziellen Rhythmen blinken oder dauerbrennen können) vorgesehen sein. Jedoch kann auch ein Display mit darstellbaren Schriftzügen oder Symbolen als Indikatoren für bestimmte Mitteilungen an den Benutzer vorgesehen sein. Alternativ oder zusätzlich kann auch eine Sprachausgabe oder eine Tonausgabe (z.B. mit unterschiedlichen Tonhöhen und/oder Töne in speziellen Rhythmen) vorhanden sein.

Gemäss eines weiteren Aspekts der Erfindung kann ferner im Rahmen des Konstruktionslasersystems eine motorisiert drehbare Plattform zur Aufnahme des Rotationslasers vorgesehen sein, die durch die Auswerte- und Steuereinheit im Rahmen der Rekalibrierungsfunktionalität derart angesteuert wird, dass für jede I-te der N Kalibrierungsmessungen der Rotationslaser automatisch gesteuert via Drehung der Plattform in die I-te azimutale Ausrichtung der Stehbasis gebracht wird.

Insbesondere kann dabei die Plattform derart ausgebildet sein, dass für eine Drehung ein Mindestfehler hinsichtlich einer Horizontalität der Plattform gewährleistbar ist und insbesondere die Drehung auch mit einem Mindesttaumelfehler behaftet ist.

Das Vorsehen einer solchen motorisiert drehbaren Plattform, auf die für die Durchführung der erfindungsgemässen Rekalibrierungsfunktionalität der Rotationslaser gestellt werden kann, ermöglicht dabei eine Vollautomatisierung des Ablaufs, sodass damit bei Bedarf die Rekalibrierungsfunktionalität auch vollautomatisch - d.h. völlig ohne Benutzerinteraktion - durchgeführt werden kann.

Gemäss eines weiteren Aspekts der Erfindung kann im Rahmen der Rekalibrierungsfunktionalität für jede I-te der N Kalibrierungsmessungen - ggf. automatisch gesteuert durch die Auswerte- und Steuereinheit - der Ausgangssignal-Empfangsmodus eingeschaltet werden
- getriggert durch eine Benutzereingabe,
- getriggert durch ein definiertes Zeittaktsignal und/oder
- getriggert durch ein Konstruktionslasersystem-seitiges, insbesondere Rotationslaser-seitiges und/oder Laserreceiver-seitiges, Feststellen, dass ein definiertes Ereignis eingetreten ist.

In einer Ausführungsform, wobei der Ausgangssignal-Empfangsmodus einschaltbar ist abhängig von einem Konstruktionslasersystem-seitiges Feststellen, dass ein definiertes Ereignis eingetreten ist, kann zudem im Rahmen der Rekalibrierungsfunktionalität für jede I-te der N Kalibrierungsmessungen automatisch gesteuert durch die Auswerte- und Steuereinheit anhand von einem Output des Horizontierungssensors fortlaufend ein aktueller Ruhighaltezustand des Rotationslasers gemessen werden und - bei Einhaltung eines definierten Ruhighalteschwellwerts - ein Signal erzeugt werden, durch das eine Freigabe zur Einschaltung des Ausgangssignal-Empfangsmodus erteilt wird (oder direkt dadurch der Ausgangssignal-Empfangsmodus eingeschaltet wird).

Des Weiteren kann auch der Laserreceiver
- einen Bewegungssensor, insbesondere einen Beschleunigungssensor, einen Drehratensensor und/oder einen Neigungs- oder Horizontierungssensor, aufweisen,
- über eine interne Funktionalität zur fortlaufenden Messung von einem aktuellen Ruhighaltezustand des Laserreceivers verfügen,
- zur Erzeugung eines - von einer Einhaltung eines definierten Ruhighalteschwellwerts abhängigen - Signals ausgebildet sein sowie
- zur über die Kommunikationsmittel erfolgenden Übertragung des Signals vom Laserreceiver an die Auswerte- und Steuereinheit ausgebildet sein,
sodass im Rahmen der Rekalibrierungsfunktionalität für jede I-te der N Kalibrierungsmessungen automatisch gesteuert durch die Auswerte- und Steuereinheit eine Freigabe zur Einschaltung des Ausgangssignal-Empfangsmodus auch anhand von einem Erhalt eines oben bezeichneten, vom Laserreceiver an die Auswerte- und Steuereinheit übertragenen Signals erteilt werden kann (bzw. insbesondere dadurch direkt der Ausgangssignal-Empfangsmodus eingeschaltet werden kann).

Gemäss eines weiteren Aspekts der Erfindung kann der Laserreceiver zur fortlaufenden - über die Kommunikationsmittel erfolgenden - Aussendung von Ausgangssignalen nach Auftreffen des Laserstrahls auf dem Laserstrahl-Detektor ausgebildet sein. Alternativ oder zusätzlich kann der Laserreceiver jedoch auch zur ereignisgesteuerten - über die Kommunikationsmittel erfolgenden - Aussendung von Ausgangssignalen nach Auftreffen des Laserstrahls ausgebildet sein, wobei die Aussendung z.B. triggerbar ist
- durch eine Benutzereingabe,
- durch ein definiertes Zeittaktsignal oder
- durch ein Konstruktionslasersystem-seitiges, insbesondere Rotationslaser-seitiges und/oder Laserreceiver-seitiges, Feststellen, dass ein definiertes Ereignis eingetreten ist.

Gemäss eines weiteren Aspekts der Erfindung können - im Rahmen der Rekalibrierungsfunktionalität für jede I-te der N Kalibrierungsmessungen automatisch gesteuert durch die Auswerte- und Steuereinheit - im Ausgangssignal-Empfangsmodus jeweils mehrere über die Kommunikationsmittel eingehende Ausgangssignale erfasst werden.

Folglich kann dann z.B. direkt laserreceiverseitig oder direkt bei Erfassung durch die Auswerte- und Steuereinheit über diese pro Kalibrierungsmessungen eingehenden mehreren jeweils I-ten Ausgangssignale (hinsichtlich der I-ten Auftreffposition) gemittelt werden und ein gemittelter Wert als I-tes Ausgangssignal bzw. I-te Auftreffposition gespeichert werden.

Alternativ können diese pro Kalibrierungsmessungen eingehenden vielen jeweils I-ten Ausgangssignale auch jeweils gespeichert werden, wobei die Auswerte- und Steuereinheit im Folgenden aus den jeweiligen vielen I-ten Ausgangssignalen die entsprechenden jeweils vielen I-ten Auftreffpositionen ausliest und diese erst für die paarweise mit der jeweiligen I-ten azimutalen Ausrichtung korreliert erfolgenden Auswertung mittelt.

Gemäss eines weiteren Aspekts der Erfindung kann der Rotationslaser
- als Dual-Grade-Rotationslaser ausgebildet sein und/oder
- mit einer Grade-Catch-Funktionalität, einer Grade-Lock-Funktionalität, insbesondere mit Tracking-Funktionalität und/oder einer Axis-Alignment-Funktionalität ausgestattet sein, wie diese hinlänglich aus dem Stand der Technik bekannt sind.

Der Ort bzw. die Stelle, wo die Auswerte- und Steuereinheit im Rahmen des erfindungsgemässen Systems körperlich untergebracht sind bzw. vorgesehen sind, kann dabei je nach Bedarf/Anforderungen und je nach gewünschtem Design verschieden gewählt sein, wie z.B. im Rotationslaser, aber auch im Receiver oder in einer dritten körperlichen Komponente, oder sogar verteilt über mehrere körperliche Einheiten wie z.B. anteilig verteilt über den Receiver und den Rotationslaser, wobei im Receiver ein erster Teil der Auswertung (etwa eine Vorprozessierung) und im Rotationslaser die Weiterprozessierung und letztendliche Richtungsbestimmung aus den vorprozessierten Daten erfolgen kann.
Je nach örtlicher Unterbringung der Auswerteeinheit können zudem verschiedene Arten von Kommunikationsmittel mit entsprechenden Kommunikationsschnittstellen vorgesehen sein, die zur Übertragung des Ausgangssignals an die Auswerteeinheit bzw. - falls die Auswerteeinheit körperlich verteilt über mehrere Einheiten ausgebildet und untergebracht ist - zur Übertragung von Daten zwischen den Teilen der Auswerteeinheit dienen. Beispielsweise können Funk-Verbindungen oder andere kabellose oder kabelgebundene Datenverbindungen dafür verwendet werden, wie diese aus dem Stand der Technik hinlänglich bekannt sind.

Durch die zuvor beschriebene Erfindung mit ihren verschiedenen Aspekten und Weiterbildungen kann nun eine Möglichkeit bereitgestellt werden zur verlässlichen, einen Mindest-Standard erfüllenden Rekalibrierung einer Strahlhorizontierfunktionalität eines Rotationslasers. Der Rekalibrierungsablauf kann dabei vergleichsweise einfach und mit vergleichsweise wenig - insbesondere keinem - Rekalibrier-Sonderzubehör ausgeführt werden. Zudem kann die erfindungsgemässe Rekalibrierungsfunktionalität nun im Wesentlichen unabhängig von der Fachkunde bzw. den Kenntnissen, Geschicke und Fähigkeiten eines Gerätebenutzer durchgeführt werden bzw. kann sie in ihrer vollautomatischen Ausführungsform sogar völlig ohne Gerätebenutzer erfolgen.

Ferner betrifft die Erfindung auch einen Rotationslaser zur Verwendung als Teil im zuvor beschriebenen Konstruktionslasersystem. Der Rotationslaser ist dabei entsprechend ausgestattet mit
- einer Lasereinheit und einem fortlaufend drehbaren Umlenkmittel, zur Emission eines rotierenden Laserstrahls derart, dass der rotierende Laserstrahl eine Referenzfläche definiert,
- einer kalibrierten Strahlhorizontierfunktionalität, insbesondere einer Strahl-Selbsthorizontierfunktionalität, wofür der Rotationslaser ferner aufweist
   □ einen Horizontierungssensor,
   □ einen Mechanismus zum zumindest geringfügigen Kippen der Rotationsachse relativ zu einer Stehbasis des Rotationslasers sowie
   □ einen Speicher mit derartigen Kalibrierdaten bezüglich eines Zusammenwirkens des Horizontierungssensor und des Mechanismus, dass über die Kalibrierdaten abhängig von einem Output des Horizontierungssensors der Mechanismus so definiert ansteuerbar und dadurch die Rotationsachse so gezielt kippbar ist, dass der rotierende Laserstrahl eine horizontale Ebene aufspannt,
- einer Auswerte- und Steuereinheit und
- einer Kommunikationsschnittstelle zum Empfang von einem laserstrahlauftreffpositionsabhängigen Ausgangssignal, das durch einen Laserreceiver, auf welchen der rotierende Laserstrahl auftrifft, erzeugbar ist.

Erfindungsgemäss ist wiederum durch die Auswerte- und Steuereinheit eine zumindest teilweise automatisch ablaufende Rekalibrierungsfunktionalität für die Strahlhorizontierfunktionalität bereitgestellt, wobei für die Rekalibrierungsfunktionalität ein Ablauf von N, mit N grösser oder gleich drei, Kalibrierungsmessungen definiert ist, die in einer jeweiligen I-ten, mit I fortlaufend aus eins bis N, azimutalen Ausrichtung der Stehbasis und in dabei unveränderter Lage des Laserreceivers mit dem Rotationslaser und dem Laserreceiver auszuführen sind.

Im Rahmen der Rekalibrierungsfunktionalität wird dabei für jede I-te der N Kalibrierungsmessungen automatisch gesteuert durch die Auswerte- und Steuereinheit folgendes durchgeführt:
- der Rotationslaser emittiert - unter Anwendung der Strahlhorizontierfunktionalität - den rotierenden Laserstrahl und
- es wird in einem Ausgangssignal-Empfangsmodus ein über die Kommunikationsschnittstelle eingehendes Ausgangssignal durch die Auswerte- und Steuereinheit erfasst und als I-tes Ausgangssignal gespeichert,

Ferner werden im Rahmen der Rekalibrierungsfunktionalität durch die Auswerte- und Steuereinheit automatisch
- aus den jeweiligen I-ten Ausgangssignalen die entsprechenden I-ten Auftreffpositionen ausgelesen,
- diese paarweise mit den jeweiligen I-ten azimutalen Ausrichtungen korreliert ausgewertet sowie
- anhand dessen die gespeicherten Kalibrierdaten überprüft und insbesondere ggf. upgedatet.

Die im Rahmen des zuvor beschriebenen Konstruktionslasersystems genannten speziellen Aspekte, Ausführungsformen und Weiterbildungen können dabei ggf. analog ebenso auch auf den Rotationslaser angewendet werden.

Ferner betrifft die Erfindung auch ein Verfahren zur Rekalibrierung einer Strahlhorizontierfunktionalität eines Rotationslasers mithilfe eines Laserreceivers, wobei der Rotationslaser zur Emission eines um eine Rotationsachse rotierenden Laserstrahls derart, dass der rotierende Laserstrahl eine Referenzfläche definiert, ausgebildet ist.

Der Rotationslaser weist dabei wiederum mindesten eine Lasereinheit und ein fortlaufend drehbares Umlenkmittel sowie die Strahlhorizontierfunktionalität auf, insbesondere Strahl-Selbsthorizontierfunktionalität. Zur Bereitstellung der Strahlhorizontierfunktionalität verfügt der Rotationslaser dabei des Weiteren über
- einen Horizontierungssensor,
- einen Mechanismus zum zumindest geringfügigen Kippen der Rotationsachse relativ zu einer Stehbasis des Rotationslasers (insbesondere in zwei Achsen) sowie
- einen Speicher mit derartigen Kalibrierdaten bezüglich eines Zusammenwirkens des Horizontierungssensor und des Mechanismus, dass über die Kalibrierdaten abhängig von einem Output des Horizontierungssensors der Mechanismus so definiert ansteuerbar und dadurch die Rotationsachse so gezielt kippbar ist, dass der rotierende Laserstrahl eine horizontale Ebene aufspannt.

Der Laserreceiver ist mit einem zumindest sich über einen eindimensionalen Bereich auf dem Laserreceiver erstreckenden Laserstrahl-Detektor ausgestattet, sodass der Laserreceiver ausgebildet ist zur Erzeugung eines Ausgangssignals abhängig von einem Auftreffen des Laserstrahls auf dem Laserstrahl-Detektor.

Das erfindungsgemässe Verfahren ist dabei gekennzeichnet durch einen Ablauf von N, mit N grösser oder gleich drei, Kalibrierungsmessungen, die in einer jeweiligen I-ten, mit I fortlaufend aus eins bis N, azimutalen Ausrichtung der Stehbasis und in dabei unveränderter Lage des Laserreceivers mit dem Rotationslaser und dem Laserreceiver ausgeführt werden.

Dabei werden für jede I-te der N Kalibrierungsmessungen automatisch seitens des Rotationslasers
- unter Anwendung der Strahlhorizontierfunktionalität der rotierende Laserstrahl emittiert und
- in einem Ausgangssignal-Empfangsmodus ein eingehendes Ausgangssignal des Laserreceivers erfasst und als I-tes Ausgangssignal gespeichert.

Zudem werden erfindungsgemäss seitens einer Auswerteeinheit des Rotationslasers automatisch die erfolgenden Schritte durchgeführt
- Auslesen der entsprechenden I-ten Auftreffpositionen aus den jeweiligen I-ten Ausgangssignalen,
- Auswerten dieser, wobei das Auswerten paarweise mit den jeweiligen I-ten azimutalen Ausrichtungen korreliert erfolgt, und
- Überprüfen und ggf. Updaten der gespeicherten Kalibrierdaten anhand eines Ergebnisses des Auswertens.

Die im Rahmen des zuvor beschriebenen Konstruktionslasersystems genannten speziellen Aspekte, Ausführungsformen und Weiterbildungen können dabei analog ebenso auch auf dieses Verfahren angewendet werden.

Ferner betrifft die Erfindung auch ein Computerprogrammprodukt mit Programmcode, der auf einem maschinenlesbaren Träger gespeichert ist und erfindungsgemäss gespeicherte Informationen enthält über einen Ablauf von N, mit N grösser oder gleich drei, Kalibrierungsmessungen, die in einer jeweiligen I-ten, mit I fortlaufend aus eins bis N, azimutalen Ausrichtung der Stehbasis und in dabei unveränderter Lage des Laserreceivers mit dem Rotationslaser und dem Laserreceiver ausgeführt werden.

Das Computerprogrammprodukt enthält dabei einen derartigen Programmcode, dass es zur Durchführung des oben beschriebenen Verfahrens ausgebildet ist, insbesondere wenn das Programm auf einer elektronischen Datenverarbeitungseinheit ausgeführt wird, im Speziellen wobei die elektronische Datenverarbeitungseinheit als Steuer- und Auswerteeinheit des zuvor beschriebenen Konstruktionslasersystems oder als Steuer- und Auswerteeinheit des zuvor beschriebenen Rotationslasers dient.

Die im Rahmen des zuvor beschriebenen Konstruktionslasersystems genannten speziellen Aspekte, Ausführungsformen und Weiterbildungen können dabei analog ebenso auch auf dieses Computerprogrammprodukt angewendet werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: ein schemenhaftes Ausführungsbeispiel für ein erfindungsgemässes Konstruktionslasersystem;
- Figur 2: eine Draufsicht des Ausführungsbeispiels aus Figur 1; und
- Figuren 3-6: vier Kalibrierungsmessungen, die in vier verschiedenen azimutalen Ausrichtungen des Rotationslasers relativ zur Laserreceiver-Richtung ausgeführt werden.

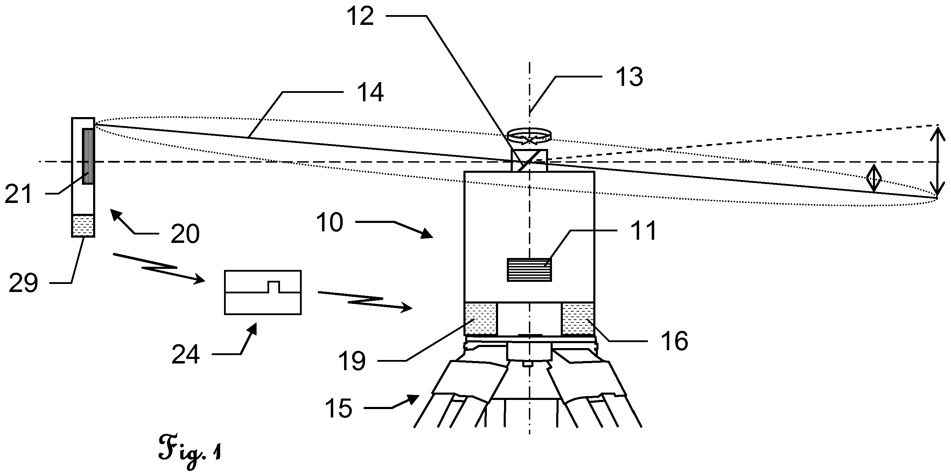

Figur 1 zeigt ein Ausführungsbeispiel für ein erfindungsgemässes Konstruktionslasersystem mit einem eine Lasereinheit 11 und ein drehbares Umlenkmittel 12 aufweisenden Rotationslaser 10 zur Emission eines rotierenden Laserstrahls 14, wobei der rotierende Laserstrahl eine Referenzfläche definiert, und einen Laserempfänger 20 mit einem zumindest sich über einen eindimensionalen Bereich auf dem Laserreceiver erstreckenden Laserstrahl-Detektor 21, der ausgebildet ist zur Erzeugung eines Ausgangssignals 24 abhängig von einer Auftreffposition des Laserstrahls auf dem Laserstrahl-Detektor. Zudem ist eine Auswerte- und Steuereinheit 16 vorgesehen.

Der Rotationslaser 10 verfügt dabei über die neu zu kalibrierende Strahlhorizontierfunktionalität, insbesondere über eine neu zu kalibrierende Strahl-Selbsthorizontierfunktionalität. Zur Bereitstellung dieser weist der Rotationslaser dabei auf
- einen Horizontierungssensor,
- einen Mechanismus zum zumindest geringfügigen Kippen der Rotationsachse relativ zu einer Stehbasis des Rotationslasers (insbesondere um zwei Achsen wie z.B. eine x-Achse und eine y-Achse) sowie
- einen Speicher mit derartigen Kalibrierdaten bezüglich eines Zusammenwirkens des Horizontierungssensor und des Mechanismus, dass über die Kalibrierdaten abhängig von einem Output des Horizontierungssensors der Mechanismus so definiert ansteuerbar und dadurch die Rotationsachse so gezielt kippbar ist, dass der rotierende Laserstrahl eine horizontale Ebene aufspannt.

Derartige Mechanismen und Sensoriken sind in diesem Zusammenhang hinlänglich aus dem Stand der Technik bekannt. So kann beispielsweise ein insbesondere die Lasereinheit und das drehbare Umlenkprisma umfassendes Herzstück des Rotationslasers (d.h. ein Laser-Core-Modul) um zwei Achsen wie z.B. eine x-Achse und eine y-Achse (zumindest jeweils geringfügig in einem Bereich von z.B. ±5°) motorisiert präzise neigbar an einem äusseren Gehäuse des Geräts aufgehängt sein und mit dem Neigungssensor bzw. Horizontierungssensor ausgestattet sein, dessen Anzeige bzw. Signal ausgelesen und als Ausgangsgrösse für eine aktive Änderung der Neigungsstellung des Laser-Core-Moduls benutzt wird.

Zudem kann der Rotationslaser - wie dies ebenso hinlänglich bekannt ist - dabei auch eine Funktion (mit entsprechender Mechanik, Sensorik und Steuerung) zur gezielten, gewünschten Neigung der Laserebene relativ zur Horizontalen um die zwei Achsen aufweisen. Dafür kann das Laser-Core-Modul des Rotationslasers gezielt motorisiert um eine der oder um die zwei Achsen geneigt und in eine gewünschte Neigungsstellung gebracht werden, sodass damit auch die Rotationsachse und folglich auch die aufgespannte Ebene gewünscht geneigt wird.

Wie in Figur 1 illustriert ist bei dem hier dargestellten Rotationslaser die Strahlhorizontierfunktionalität gestört, sodass mit dem rotierenden Laserstrahl 14 keine streng horizontal ausgerichtete Ebene aufgespannt wird, sondern eine gegenüber der Horizontalen leicht geneigte Ebene.

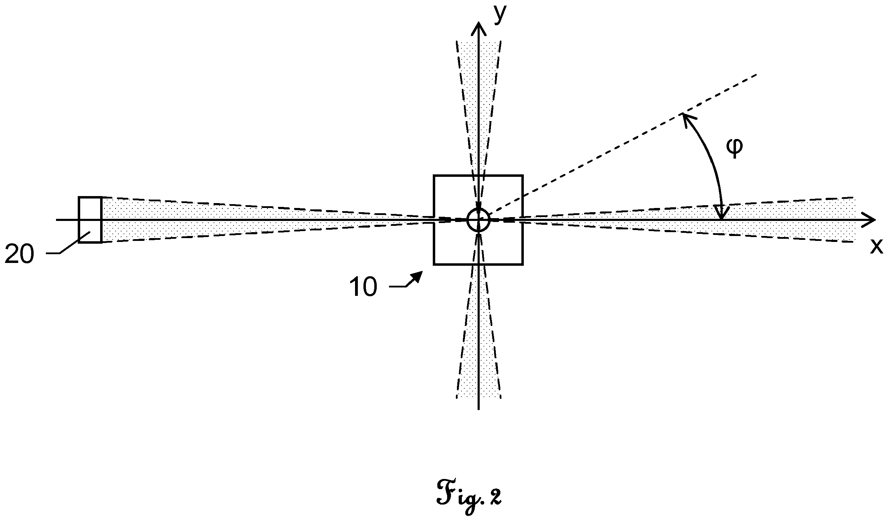

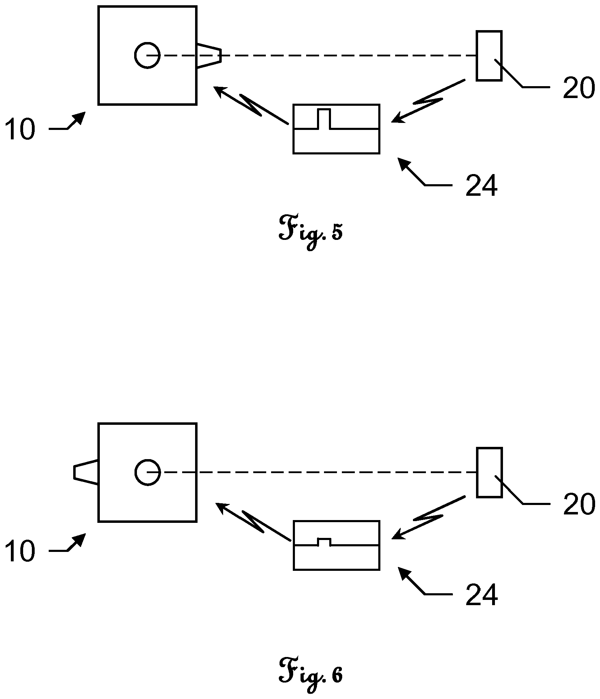

Erfindungsgemäss ist - wie dies näher anhand von Figur 2 sowie Figuren 3-6 illustriert ist - zur Überprüfung bzw. Rekalibrierung der Strahlhorizontierfunktionalität durch die Auswerte- und Steuereinheit 16 eine zumindest teilweise automatisch ablaufende Rekalibrierungsfunktionalität bereitgestellt, wobei ein Ablauf von N, mit N grösser oder gleich drei, Kalibrierungsmessungen definiert ist, die in einer jeweiligen I-ten, mit I fortlaufend aus eins bis N, azimutalen Ausrichtung der Stehbasis und in dabei unveränderter Lage des Laserreceivers mit dem Rotationslaser und dem Laserreceiver auszuführen sind.

Im Rahmen der Rekalibrierungsfunktionalität wird dabei für jede I-te der N Kalibrierungsmessungen automatisch gesteuert durch die Auswerte- und Steuereinheit folgendes durchgeführt:
- der Rotationslaser emittiert - unter Anwendung der Strahlhorizontierfunktionalität - den rotierenden Laserstrahl und
- es wird in einem Ausgangssignal-Empfangsmodus ein über die Kommunikationsschnittstelle eingehendes Ausgangssignal durch die Auswerte- und Steuereinheit erfasst und als I-tes Ausgangssignal gespeichert,

Ferner werden im Rahmen der Rekalibrierungsfunktionalität durch die Auswerte- und Steuereinheit automatisch
- aus den jeweiligen I-ten Ausgangssignalen die entsprechenden I-ten Auftreffpositionen ausgelesen,
- diese paarweise mit den jeweiligen I-ten azimutalen Ausrichtungen korreliert ausgewertet sowie
- anhand dessen die gespeicherten Kalibrierdaten überprüft und insbesondere ggf. upgedatet.

In der gezeigten Ausführungsform bezüglich räumlicher Unterbringung der Auswerte- und Steuereinheit 16 sind dabei beispielhaft die kabbellosen Kommunikationsmittel ausgebildet mit einer rotationslaserseitigen, zumindest datenempfangenden Kommunikationsschnittstelle 19 und einer laserreceiverseitigen, zumindest datensendenden Kommunikationsschnittstelle 29 (insbesondere jeweils Funk-Module), sodass dadurch das Ausgangssignal 24 an die Auswerte- und Steuereinheit 19 übertragbar ist.

Im Speziellen wird erfindungsgemäss damit nun eine Möglichkeit bereitgestellt zur verlässlichen, einen Mindest-Standard erfüllenden Rekalibrierung der Strahlhorizontierfunktionalität eines Rotationslasers. Der Rekalibrierungsablauf kann dabei vergleichsweise einfach und mit vergleichsweise wenig - insbesondere keinem - Rekalibrier-Sonderzubehör ausgeführt werden. Zudem kann die erfindungsgemässe Rekalibrierungsfunktionalität nun im Wesentlichen unabhängig von der Fachkunde bzw. den Kenntnissen, Geschicke und Fähigkeiten eines Gerätebenutzer durchgeführt werden bzw. kann sie in ihrer vollautomatischen Ausführungsform sogar völlig ohne Gerätebenutzer erfolgen.

Für den hier auf einem Stativ 15 aufgestellten Rotationslaser 10 sind dabei im Einzelnen unterschiedliche Ausführungsformen von Laserquellen für die Lasereinheit 11, insbesondere Diodenlaser, aus dem Stand der Technik bekannt. Die durch die Lasereinheit 11 emittierte Laserstrahlung trifft in ihrem Strahlengang auf eine Laserstrahlungsumlenkeinheit 12, die den Laserstrahl im gezeigten Beispiel um 90° umlenkt. Die Laserstrahlungsumlenkeinheit 12 ist beispielsweise als ein um 45° zur eintreffenden Laserstrahlung verkippter Spiegel, vorzugsweise jedoch als ein Pentaprisma bzw. Pentaspiegel, der unabhängig vom Einfallswinkel stets die Laserstrahlung um 90° umlenkt, ausgebildet. Die Laserstrahlungsumlenkeinheit 12 steht in einer derartigen Winkverbindung mit einer Rotationsbewirkungseinheit, so dass die Laserstrahlungsumlenkeinheit 12 um eine Rotationsachse 13 motorisch antreibbar rotiert. Die Rotationseinheit ist beispielsweise als eine kugelgelagerte, den Strahlengang der Laserstrahlung umgebende Hülse, die über einen Riemenantrieb von einem Elektromotor angetrieben wird, ausgebildet. Somit erfolgt die Emission einer Laserstrahlung 14 in eine rotierende Emissionsrichtung a, so dass die dargestellte Quasilaserebene erzeugt wird. Als Rotationszentrum wird der Schnittpunkt dieser Quasilaserebene mit der Rotationsachse 13 definiert. Das Rotationszentrum kann von einem transparenten Austrittsfenster derart umgeben sein, dass die Laserstrahlung durch das Austrittsfenster nach aussen gelangt. An der Rotationseinheit 3 können indirekt Mittel z.B. in Form eines Winkeldetektors angeordnet sein, die ein Erfassen der jeweils aktuellen Winkelausrichtung der Laserstrahlungsumlenkeinheit 12 (d.h. eine Winkelinformation bezüglich einer jeweils aktuellen Drehstellung des Umlenkmittels 12) und somit der jeweiligen Emissionsrichtung α der Laserstrahlung 5 ermöglichen.

Der Laserstrahl-Detektor 21 des Laserreceivers 20 ist dabei beispielsweise - wie aus dem Stand der Technik bekannt - so ausgebildet sein, dass eine Auftreffposition des Laserstrahls auf der Laserstrahl-Detektor-Linie bzw. -Fläche abgeleitet werden kann, wofür die photosensitiven Elemente - betrachtet in aufrechter Betriebsstellung des Geräts - in einer vertikal ausgerichteten Sensorzeile aneinander gereiht sein können, sodass sich also der Laserstrahl-Detektor 21 zumindest über eine vertikale Linie (als eindimensionaler Bereich) auf dem Laserreceiver 20 erstreckt. Zudem kann im Laserreceiver 20 auch eine eigene Auswerteeinheit etwa zur Ermittlung der Position des Laserempfängers relativ zur durch den rotierenden Laserstrahl definierten Referenzhöhe anhand des Outputs des Laserstrahl-Detektors 20 sowie ein Indikator für die ermittelte Position (etwa eine visuelle Anzeige), insbesondere ausgebildet zur Indikation, ob der Laserempfänger 20 mit der Referenzfläche exakt koinzidiert, in das Laserempfängergerät integriert sein. Die Position kann dabei beispielsweise z.B. als Mittelpunkt jenes Bereichs auf der Laserstrahl-Detektor-Zeile, welcher durch den Laserstrahl beleuchtet wird, ermittelt werden.

Figur 2 zeigt eine Draufsicht des Ausführungsbeispiels aus Figur 1 mit dem Rotationslaser 10 und dem Laserempfänger 20.

Durch den rotationslaserseitig vorgesehenen Mechanismus zum zumindest geringfügigen Kippen der Rotationsachse relativ zu einer Stehbasis des Rotationslasers um zwei Achsen (eine x-Achse und eine y-Achse) sind rotationslaserintern nun vier Richtungen definiert, eine +x-Richtung, eine -x-Richtung, eine +y-Richtung und eine -y-Richtung.

Der in Figur 2 gezeigte Rotationslaser 10 ist dabei in einer derartigen definierten azimutalen Ausrichtung relativ zur Richtung, in der sich der Laserreceiver befindet, aufgestellt, dass seine -x-Richtung in die Laserreceiver-Richtung zeigt.

Wie eingangs im Rahmen der allgemeinen Erfindungsbeschreibung erläutert kann der Ablauf z.B. mit genau vier Kalibrierungsmessungen definiert sein und die dabei jeweils einzunehmenden azimutalen Ausrichtungen jeweils um 90° beabstandet sein, wobei die vier azimutalen Ausrichtungen relativ zur Laserreceiver-Richtung hier nun so vorgegeben sind, dass für die vier Kalibriermessungen jeweils einmal die +x-Richtung, einmal die -x-Richtung, einmal die +y-Richtung und einmal die -y-Richtung des Rotationslasers genau in Richtung des Laserreceivers zeigt.

Gepunktet dargestellt in Figur 2 sind dabei jeweils Toleranzbereiche für die vier vorgegebenen einzunehmenden azimutalen Ausrichtungen.

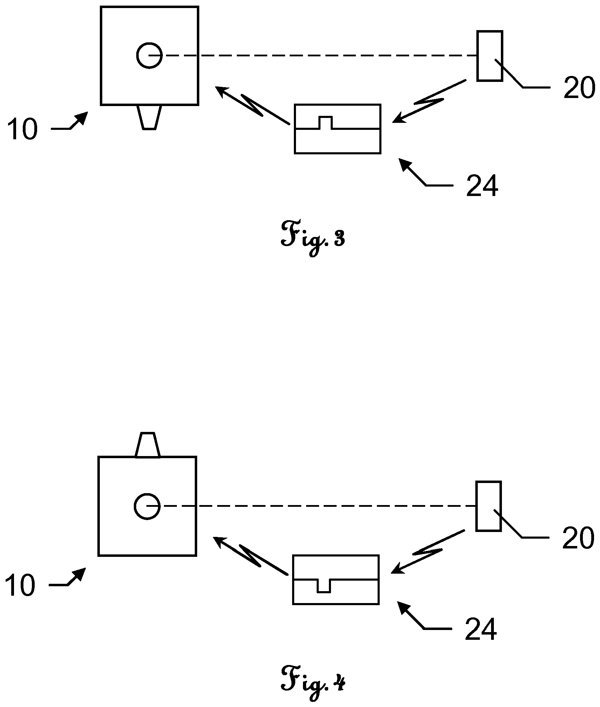

In den Figuren 3 bis 6 sind dabei nun vier Kalibrierungsmessungen illustriert, wobei der Rotationslaser 10 nun der Reihe nach in genau den - im Rahmen der Beschreibung von Figur 2 erläuterten - vier vorgegebenen verschiedenen azimutalen Ausrichtungen relativ zur Laserreceiver-Richtung orientiert ist, d.h.
- einmal sodass seine +x-Richtung genau in Richtung des Laserreceivers 20 zeigt (1-te Ausrichtung im Rahmen der 1-ten Kalibrierungsmessung, wobei das dabei übermittelte laserstrahlauftreffpositionsabhängige Ausgangssignal 24 als 1-tes Ausgangssignal erfasst wird),
- einmal sodass seine -x-Richtung genau in Richtung des Laserreceivers 20 zeigt (2-te Ausrichtung im Rahmen der 2-ten Kalibrierungsmessung, wobei das dabei übermittelte laserstrahlauftreffpositionsabhängige Ausgangssignal 24 als 2-tes Ausgangssignal erfasst wird),
- einmal sodass seine +y-Richtung genau in Richtung des Laserreceivers 20 zeigt (3-te Ausrichtung im Rahmen der 3-ten Kalibrierungsmessung, wobei das dabei übermittelte laserstrahlauftreffpositionsabhängige Ausgangssignal 24 als 3-tes Ausgangssignal erfasst wird), und
- einmal sodass seine -y-Richtung genau in Richtung des Laserreceivers 20 zeigt (4-te Ausrichtung im Rahmen der 4-ten Kalibrierungsmessung, wobei das dabei übermittelte laserstrahlauftreffpositionsabhängige Ausgangssignal 24 als 4-tes Ausgangssignal erfasst wird).

Aus den jeweiligen I-ten Ausgangssignalen können nun die entsprechenden I-ten Auftreffpositionen ausgelesen werden. Diese können paarweise mit den jeweiligen bekannten I-ten azimutalen Ausrichtungen korreliert ausgewertet werden und basierend darauf kann die Horizontalitätstreue des Self-Levelling überprüft und ggf. die für das Self-Levelling gespeicherten Kalibrierdaten upgedatet werden.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Konstruktionslasersystem mit mindestens
• einem eine Lasereinheit (11) und ein fortlaufend drehbares Umlenkmittel (12) aufweisenden Rotationslaser (10) zur Emission eines um eine Rotationsachse (13) rotierenden Laserstrahls (14) derart, dass der rotierende Laserstrahl (14) eine Referenzfläche definiert, wobei der Rotationslaser (10) ausgestattet ist mit einer kalibrierten Strahlhorizontierfunktionalität, insbesondere eine Strahl-Selbsthorizontierfunktionalität, und dafür ferner aufweist
□ einen Horizontierungssensor,
□ einen Mechanismus zum zumindest geringfügigen Kippen der Rotationsachse (13) relativ zu einer Stehbasis (15) des Rotationslasers (10) sowie
□ einen Speicher mit derartigen Kalibrierdaten bezüglich eines Zusammenwirkens des Horizontierungssensors und des Mechanismus, dass über die Kalibrierdaten abhängig von einem Output des Horizontierungssensors der Mechanismus so definiert ansteuerbar und dadurch die Rotationsachse (13) so gezielt kippbar ist, dass der rotierende Laserstrahl (14) eine horizontale Ebene aufspannt,
• einem Laserreceiver (20) mit einem zumindest sich über einen eindimensionalen Bereich auf dem Laserreceiver (20) erstreckenden positionssensitiven Laserstrahl-Detektor (21), sodass der Laserreceiver (20) ausgebildet ist zur Erzeugung eines Ausgangssignals abhängig von einer Auftreffposition des Laserstrahls (14) auf dem Laserstrahl-Detektor (21),
• einer Auswerte- und Steuereinheit (16) und
• Kommunikationsmitteln (19,29) zur Übertragung des Ausgangssignals (24) vom Laserreceiver (20) an die Auswerte- und Steuereinheit (16),
**dadurch gekennzeichnet, dass**
durch die Auswerte- und Steuereinheit (16) eine zumindest teilweise automatisch ablaufende Rekalibrierungsfunktionalität für die Strahlhorizontierfunktionalität bereitgestellt ist, wobei für die Rekalibrierungsfunktionalität ein Ablauf von N, mit N grösser oder gleich drei, Kalibrierungsmessungen definiert ist, die in einer jeweiligen I-ten, mit I fortlaufend aus eins bis N, azimutalen Ausrichtung der Stehbasis (15) und in dabei unveränderter Lage des Laserreceivers (20) mit dem Rotationslaser (10) und dem Laserreceiver (20) auszuführen sind, und wobei im Rahmen der Rekalibrierungsfunktionalität
• für jede I-te der N Kalibrierungsmessungen automatisch gesteuert durch die Auswerte- und Steuereinheit
□ der Rotationslaser - unter Anwendung der Strahlhorizontierfunktionalität - den rotierenden Laserstrahl (14) emittiert und
□ in einem Ausgangssignal-Empfangsmodus ein über die Kommunikationsmittel (19,29) eingehendes Ausgangssignal (24) durch die Auswerte- und Steuereinheit (16) erfasst und als I-tes Ausgangssignal (24) gespeichert wird,
• die Auswerte- und Steuereinheit automatisch
□ aus den jeweiligen I-ten Ausgangssignalen (24) die entsprechenden I-ten Auftreffpositionen ausliest,
□ diese paarweise mit den jeweiligen I-ten azimutalen Ausrichtungen korreliert auswertet sowie
□ anhand dessen die gespeicherten Kalibrierdaten überprüft und insbesondere ggf. updatet.

2. Konstruktionslasersystem nach Anspruch 1,
**dadurch gekennzeichnet, dass**
der Ablauf der N Kalibrierungsmessungen für die Rekalibrierungsfunktionalität derart definiert ist, dass die jeweiligen I-ten azimutalen Ausrichtungen zumindest eine Menge von fix vorgegeben verschiedenen azimutalen Ausrichtungen der Stehbasis (15) relativ zu einer Richtung, in der sich der Laserreceiver (20) aus Sicht des Rotationslasers (10) befindet, abdecken.

3. Konstruktionslasersystem nach einem der vorangehenden Ansprüche,
**dadurch gekennzeichnet, dass**
das Konstruktionslasersystem über eine Richtungsbestimmungsfunktionalität verfügt zur Bestimmung einer aktuellen Richtung zum Laserreceiver (20) aus Sicht des Rotationslasers (10) als Laserreceiver-Richtung, und dadurch, dass im Rahmen der Rekalibrierungsfunktionalität für jede I-te der N Kalibrierungsmessungen automatisch gesteuert durch die Auswerte- und Steuereinheit (16) unter Anwendung der Richtungsbestimmungsfunktionalität eine I-te Laserreceiver-Richtung bestimmt und jeweils darüber die I-te azimutale Ausrichtung des Rotationslasers (10) relativ zu der Laserreceiver-Richtung abgeleitet wird.

4. Konstruktionslasersystem nach einem der Ansprüche 1 oder 2,
**dadurch gekennzeichnet, dass**
der Ablauf der N Kalibrierungsmessungen für die Rekalibrierungsfunktionalität derart definiert ist, dass jede I-te azimutale Ausrichtung der Stehbasis (15) relativ zu einer Richtung, in der sich der Laserreceiver (20) aus Sicht des Rotationslasers (10) befindet, fix vorgegeben ist.

5. Konstruktionslasersystem nach einem der vorangehenden Ansprüche,
**dadurch gekennzeichnet, dass**
der Ablauf mit N grösser oder gleich vier Kalibrierungsmessungen definiert ist und die dabei jeweils einzunehmenden azimutalen Ausrichtungen rotationssymmetrisch um den vollen Umfang von einer azimutalen Drehung der Stehbasis (15) verteilt sind, insbesondere wobei der Ablauf mit N gleich vier Kalibrierungsmessungen definiert ist und die dabei jeweils einzunehmenden azimutalen Ausrichtungen jeweils um 90° beabstandet sind.

6. Konstruktionslasersystem nach einem der vorangehenden Ansprüche,
**dadurch gekennzeichnet, dass**
Ausgabemittel zur Ausgabe von visuellen Indikatoren vorhanden sind, die durch die Auswerte- und Steuereinheit (16) im Rahmen der Rekalibrierungsfunktionalität derart angesteuert werden, dass ein Benutzer dadurch durch den Ablauf von N Kalibrierungsmessungen geführt wird, insbesondere wobei
• ein Indikator angezeigt wird zur Aufforderung des Benutzers zur Umstellung und Einnehmung der jeweiligen I-ten azimutalen Ausrichtung der Stehbasis (15),
• ein Indikator angezeigt wird als Angabe dafür, dass die jeweilige I-ten azimutalen Ausrichtung der Stehbasis (15) hinreichend eingenommen ist und/oder dass eine automatisch Konstruktionslasersystem-seitig erfolgende Bestimmung der aktuell eingenommenen I-ten azimutalen Ausrichtung erfolgreich abgeschlossen ist, und/oder
• nach Abschluss der jeweiligen I-ten Kalibriermessung ein Indikator angezeigt wird als Angabe dafür, dass
□ die nächste, (I+1-te) azimutale Ausrichtung der Stehbasis eingenommen werden soll,
□ alle N Kalibriermessungen abgeschlossen sind, insbesondere zudem mit ergänzender Angabe darüber, ob die gespeicherten Kalibrierdaten anhand der durchgeführten N Kalibriermessungen hinlänglich profund überprüft und ggf. mit hinreichender Genauigkeit, sodass die Strahlhorizontierfunktionalität eine vorgegebene Genauigkeitsanforderung erfüllt, upgedatet werden können.

7. Konstruktionslasersystem nach einem der vorangehenden Ansprüche,
**dadurch gekennzeichnet, dass**
eine motorisiert drehbare Plattform zur Aufnahme des Rotationslasers (10) vorgesehen ist, die durch die Auswerte- und Steuereinheit (16) im Rahmen der Rekalibrierungsfunktionalität derart angesteuert wird, dass für jede I-te der N Kalibrierungsmessungen der Rotationslaser (10) automatisch gesteuert via Drehung der Plattform in die I-te azimutale Ausrichtung der Stehbasis (15) gebracht wird,
insbesondere wobei die Plattform derart ausgebildet ist, dass für eine Drehung ein Mindestfehler hinsichtlich einer Horizontalität der Plattform gewährleistbar ist und insbesondere die Drehung auch mit einem Mindesttaumelfehler behaftet ist.

8. Konstruktionslasersystem nach einem der vorangehenden Ansprüche,
**dadurch gekennzeichnet, dass**
im Rahmen der Rekalibrierungsfunktionalität für jede I-te der N Kalibrierungsmessungen automatisch gesteuert durch die Auswerte- und Steuereinheit (16) der Ausgangssignal-Empfangsmodus eingeschaltet wird
• getriggert durch eine Benutzereingabe,
• getriggert durch ein definiertes Zeittaktsignal und/oder
• getriggert durch ein Konstruktionslasersystem-seitiges, insbesondere Rotationslaser-seitiges und/oder Laserreceiver-seitiges, Feststellen, dass ein definiertes Ereignis eingetreten ist.

9. Konstruktionslasersystem nach Anspruch 8, wobei der Ausgangssignal-Empfangsmodus einschaltbar ist abhängig von einem Konstruktionslasersystem-seitigen Feststellen, dass ein definiertes Ereignis eingetreten ist,
**dadurch gekennzeichnet, dass**
im Rahmen der Rekalibrierungsfunktionalität für jede I-te der N Kalibrierungsmessungen automatisch gesteuert durch die Auswerte- und Steuereinheit (16) anhand von einem Output des Horizontierungssensors fortlaufend ein aktueller Ruhighaltezustand des Rotationslasers (10) gemessen wird und bei Einhaltung eines definierten Ruhighalteschwellwerts ein Signal erzeugt wird, durch das eine Freigabe zur Einschaltung des Ausgangssignal-Empfangsmodus erteilt wird, insbesondere wobei dadurch direkt der Ausgangssignal-Empfangsmodus eingeschaltet wird.

10. Konstruktionslasersystem nach Anspruch 8 oder 9, wobei der Ausgangssignal-Empfangsmodus einschaltbar ist abhängig von einem Konstruktionslasersystem-seitiges Feststellen, dass ein definiertes Ereignis eingetreten ist,
**dadurch gekennzeichnet, dass**
der Laserreceiver (20)
• einen Bewegungssensor, insbesondere einen Beschleunigungssensor, einen Drehratensensor und/oder einen Neigungs- oder Horizontierungssensor, aufweist,
• über eine interne Funktionalität zur fortlaufenden Messung von einem aktuellen Ruhighaltezustand des Laserreceivers (20) verfügt,
• zur Erzeugung eines - von einer Einhaltung eines definierten Ruhighalteschwellwerts abhängigen - Signals ausgebildet ist sowie
• zur über die Kommunikationsmittel (19,29) erfolgenden Übertragung des Signals (24) vom Laserreceiver (20) an die Auswerte- und Steuereinheit (16) ausgebildet ist, und
im Rahmen der Rekalibrierungsfunktionalität für jede I-te der N Kalibrierungsmessungen automatisch gesteuert durch die Auswerte- und Steuereinheit anhand von einem Erhalt des Signals (24) eine Freigabe zur Einschaltung des Ausgangssignal-Empfangsmodus erteilt wird, insbesondere wobei dadurch direkt der Ausgangssignal-Empfangsmodus eingeschaltet wird.

11. Konstruktionslasersystem nach einem der vorangehenden Ansprüche,
**dadurch gekennzeichnet, dass**
der Laserreceiver (20) zur fortlaufenden - über die Kommunikationsmittel (19,29) erfolgenden - Aussendung von Ausgangssignalen (24) nach Auftreffen des Laserstrahls (14) auf dem Laserstrahl-Detektor (21) ausgebildet ist und/oder zur ereignisgesteuerten - über die Kommunikationsmittel (19,29) erfolgenden - Aussendung von Ausgangssignalen (24) nach Auftreffen des Laserstrahls (14) ausgebildet ist, wobei die Aussendung triggerbar ist
• durch eine Benutzereingabe,
• durch ein definiertes Zeittaktsignal oder
• durch ein Konstruktionslasersystem-seitiges, insbesondere Rotationslaser-seitiges und/oder Laserreceiver-seitiges, Feststellen, dass ein definiertes Ereignis eingetreten ist.

12. Konstruktionslasersystem nach einem der vorangehenden Ansprüche,
**dadurch gekennzeichnet, dass**
im Rahmen der Rekalibrierungsfunktionalität für jede I-te der N Kalibrierungsmessungen automatisch gesteuert durch die Auswerte- und Steuereinheit (16) im Ausgangssignal-Empfangsmodus jeweils mehrere über die Kommunikationsmittel (19,29) eingehende Ausgangssignale (24) erfasst werden und
• über diese gemittelt wird und ein gemittelter Wert als I-tes Ausgangssignal (24) gespeichert wird oder
• als viele I-te Ausgangssignale (24) gespeichert werden, wobei die Auswerte- und Steuereinheit (16) im Folgenden aus den jeweiligen vielen I-ten Ausgangssignalen (24) die entsprechenden vielen I-ten Auftreffpositionen ausliest und diese gemittelt jeweils paarweise mit den jeweiligen I-ten azimutalen Ausrichtungen korreliert auswertet.

13. Rotationslaser (10) zur Verwendung als Teil im Konstruktionslasersystem nach einem der vorangehenden Ansprüche, mit mindestens
• einer Lasereinheit (11) und einem fortlaufend drehbaren Umlenkmittel (12), zur Emission eines rotierenden Laserstrahls (14) derart, dass der rotierende Laserstrahl (14) eine Referenzfläche definiert,
• einer kalibrierten Strahlhorizontierfunktionalität, insbesondere eine Strahl-Selbsthorizontierfunktionalität, wofür der Rotationslaser (10) ferner aufweist
□ einen Horizontierungssensor,
□ einen Mechanismus zum zumindest geringfügigen Kippen der Rotationsachse (13) relativ zu einer Stehbasis (15) des Rotationslasers (10) sowie
□ einen Speicher mit derartigen Kalibrierdaten bezüglich eines Zusammenwirkens des Horizontierungssensor und des Mechanismus, dass über die Kalibrierdaten abhängig von einem Output des Horizontierungssensors der Mechanismus so definiert ansteuerbar und dadurch die Rotationsachse (13) so gezielt kippbar ist, dass der rotierende Laserstrahl (14) eine horizontale Ebene aufspannt,
• einer Auswerte- und Steuereinheit (16) und
• einer Kommunikationsschnittstelle (19) zum Empfang von einem - durch einen Laserreceiver (20), auf welchen der rotierende Laserstrahl (14) auftrifft, erzeugbaren - laserstrahlauftreffpositionsabhängigen Ausgangssignal (24),
**dadurch gekennzeichnet, dass**
durch die Auswerte- und Steuereinheit (16) eine zumindest teilweise automatisch ablaufende Rekalibrierungsfunktionalität für die Strahlhorizontierfunktionalität bereitgestellt ist, wobei für die Rekalibrierungsfunktionalität ein Ablauf von N, mit N grösser oder gleich drei, Kalibrierungsmessungen definiert ist, die in einer jeweiligen I-ten, mit I fortlaufend aus eins bis N, azimutalen Ausrichtung der Stehbasis (15) und in dabei unveränderter Lage des Laserreceivers (20) mit dem Rotationslaser und dem Laserreceiver (20) auszuführen sind, und wobei im Rahmen der Rekalibrierungsfunktionalität
• für jede I-te der N Kalibrierungsmessungen automatisch gesteuert durch die Auswerte- und Steuereinheit (16)
□ der Rotationslaser (10) - unter Anwendung der Strahlhorizontierfunktionalität - den rotierenden Laserstrahl (14) emittiert und
□ in einem Ausgangssignal-Empfangsmodus ein über die Kommunikationsschnittstelle (19) eingehendes Ausgangssignal (24) durch die Auswerte- und Steuereinheit (16) erfasst und als I-tes Ausgangssignal (24) gespeichert wird,
• die Auswerte- und Steuereinheit (16) automatisch
□ aus den jeweiligen I-ten Ausgangssignalen (24) die entsprechenden I-ten Auftreffpositionen ausliest,
□ diese paarweise mit den jeweiligen I-ten azimutalen Ausrichtungen korreliert auswertet sowie
□ anhand dessen die gespeicherten Kalibrierdaten überprüft und insbesondere ggf. updatet.

14. Verfahren zur Rekalibrierung einer Strahlhorizontierfunktionalität eines Rotationslasers (10) mithilfe eines Laserreceivers (20), wobei der Rotationslaser (10) zur Emission eines um eine Rotationsachse (13) rotierenden Laserstrahls (14) derart, dass der rotierende Laserstrahl (14) eine Referenzfläche definiert, ausgebildet ist und aufweist
• eine Lasereinheit (11) und ein fortlaufend drehbares Umlenkmittel (12) und
• die Strahlhorizontierfunktionalität, insbesondere Strahl-Selbsthorizontierfunktionalität, und dafür ferner aufweist
□ einen Horizontierungssensor,
□ einen Mechanismus zum zumindest geringfügigen Kippen der Rotationsachse (13) relativ zu einer Stehbasis (15) des Rotationslasers (10) sowie
□ einen Speicher mit derartigen Kalibrierdaten bezüglich eines Zusammenwirkens des Horizontierungssensor und des Mechanismus, dass über die Kalibrierdaten abhängig von einem Output des Horizontierungssensors der Mechanismus so definiert ansteuerbar und dadurch die Rotationsachse (13) so gezielt kippbar ist, dass der rotierende Laserstrahl (14) eine horizontale Ebene aufspannt,
und wobei der Laserreceiver (20) mit einem zumindest sich über einen eindimensionalen Bereich auf dem Laserreceiver (20) erstreckenden Laserstrahl-Detektor (21) ausgestattet ist, sodass der Laserreceiver (20) ausgebildet ist zur Erzeugung eines Ausgangssignals (24) abhängig von einem Auftreffen des Laserstrahls (24) auf dem Laserstrahl-Detektor (21),
**gekennzeichnet durch**
einen Ablauf von N, mit N grösser oder gleich drei, Kalibrierungsmessungen, die in einer jeweiligen I-ten, mit I fortlaufend aus eins bis N, azimutalen Ausrichtung der Stehbasis (15) und in dabei unveränderter Lage des Laserreceivers (20) mit dem Rotationslaser (10) und dem Laserreceiver (20) ausgeführt werden, wobei für jede I-te der N Kalibrierungsmessungen automatisch seitens des Rotationslasers (10)
• unter Anwendung der Strahlhorizontierfunktionalität der rotierende Laserstrahl (14) emittiert wird und
• in einem Ausgangssignal-Empfangsmodus ein eingehendes Ausgangssignal (24) des Laserreceivers (20) erfasst und als I-tes Ausgangssignal (24) gespeichert wird, sowie die ferner automatisch seitens des Rotationslasers (10) erfolgenden Schritte
• Auslesen der entsprechenden I-ten Auftreffpositionen aus den jeweiligen I-ten Ausgangssignalen (24),
• Auswerten dieser, wobei das Auswerten paarweise mit den jeweiligen I-ten azimutalen Ausrichtungen korreliert erfolgt, und
• Überprüfen und ggf. Updaten der gespeicherten Kalibrierdaten anhand eines Ergebnisses des Auswertens.

15. Computerprogrammprodukt mit Programmcode, der auf einem maschinenlesbaren Träger gespeichert ist und gespeicherte Informationen enthält über einen Ablauf von N, mit N grösser oder gleich drei, Kalibrierungsmessungen, die in einer jeweiligen I-ten, mit I fortlaufend aus eins bis N, azimutalen Ausrichtung der Stehbasis (15) und in dabei unveränderter Lage des Laserreceivers (20) mit dem Rotationslaser (10) und dem Laserreceiver (10) ausgeführt werden,
zur Durchführung des Verfahrens nach Anspruch 14, insbesondere wenn das Programm auf einer elektronischen Datenverarbeitungseinheit ausgeführt wird, im Speziellen wobei die elektronische Datenverarbeitungseinheit als Steuer- und Auswerteeinheit (16) des Konstruktionslasersystems nach einem der Ansprüche 1 bis 12 oder als Steuer- und Auswerteeinheit (16) des Rotationslasers (10) nach Anspruch 13 dient.

## Claims

1. Construction laser system comprising at least
• a rotating laser (10) having a laser unit (11) and a continuously rotatable deflection means (12) for emitting a laser beam (14) rotating about an axis of rotation (13) in such a way that the rotating laser beam (14) defines a reference area, wherein the rotating laser (10) is equipped with a calibrated beam leveling functionality, in particular a beam self-leveling functionality, and for this purpose furthermore has
□ a leveling sensor,
□ a mechanism for at least slightly tilting the axis of rotation (13) relative to a stand (15) of the rotating laser (10) and
□ a memory with such calibration data relating to an interaction of the leveling sensor and the mechanism that, via the calibration data, depending on an output of the leveling sensor, the mechanism can be actuated in a defined manner and thus the axis of rotation (13) can be tilted in a targeted manner in such a way that the rotating laser beam (14) spans a horizontal plane,
• a laser receiver (20) comprising a position-sensitive laser beam detector (21), which extends at least over a one-dimensional region on the laser receiver (20), with the result that the laser receiver (20) is designed to generate an output signal depending on an impingement position of the laser beam (14) on the laser beam detector (21),
• an evaluation and control unit (16), and
• communication means (19,29) for transmitting the output signal (24) from the laser receiver (20) to the evaluation and control unit (16),
**characterized in that**
an at least partially automatically running recalibration functionality for the beam leveling functionality is provided by the evaluation and control unit (16), wherein, for the recalibration functionality, a sequence of N calibration measurements is defined, where N is greater than or equal to three, which calibration measurements are to be implemented by the rotating laser (10) and the laser receiver (20) with a respective I-th azimuthal alignment of the stand (15), where I is continuously from one to N, and with an in the process unchanged position of the laser receiver (20), and wherein, as part of the recalibration functionality,
• for every I-th of the N calibration measurements, automatically controlled by the evaluation and control unit,
□ the rotating laser, using the beam leveling functionality, emits the rotating laser beam (14), and
□ in an output signal reception mode, an output signal (24) incoming via the communication means (19,29) is detected by the evaluation and control unit (16) and is stored as the I-th output signal (24),
• the evaluation and control unit automatically
□ reads the corresponding I-th impingement positions from the respective I-th output signals (24),
□ evaluates these impingement positions in pairs correlated with the respective I-th azimuthal alignments, and
o on the basis of this, checks and in particular possibly updates the stored calibration data.

2. Construction laser system according to Claim 1,
**characterized in that**
the sequence of the N calibration measurements for the recalibration functionality is defined in such a way that the respective I-th azimuthal alignments cover at least a proportion of fixedly predetermined different azimuthal alignments of the stand (15) relative to a direction in which the laser receiver (20) is located, from the point of view of the rotating laser (10).

3. Construction laser system according to any one of the preceding claims,
**characterized in that**
the construction laser system has a direction determination functionality for determining a present direction towards the laser receiver (20) from the point of view of the rotating laser (10) as the laser receiver direction and **in that**,
as part of the recalibration functionality, for every I-th of the N calibration measurements, automatically controlled by the evaluation and control unit (16), using the direction determination functionality an I-th laser receiver direction is determined and in each case the I-th azimuthal alignment of the rotating laser (10) relative to the laser receiver direction is derived thereby.

4. Construction laser system according to either one of Claims 1 and 2,
**characterized in that**
the sequence of the N calibration measurements for the recalibration functionality is defined in such a way that every I-th azimuthal alignment of the stand (15) relative to a direction in which the laser receiver (20) is located, from the point of view of the rotating laser (10), is fixedly predetermined.

5. Construction laser system according to any one of the preceding claims,
**characterized in that**
the sequence is defined with N being greater than or equal to four calibration measurements and the azimuthal alignments to be assumed in each case are distributed rotationally symmetrically around the entire circumference of an azimuthal rotation of the stand (15), in particular wherein the sequence is defined with N being equal to four calibration measurements, and the azimuthal alignments to be assumed in each case are each spaced apart through 90°.

6. Construction laser system according to any one of the preceding claims,
**characterized in that**
output means for outputting visual indicators are provided, which are actuated by the evaluation and control unit (16) as part of the recalibration functionality in such a way that a user is thus guided through the sequence of N calibration measurements, in particular wherein
• an indicator is displayed in order to request the user to reposition and assume the respective I-th azimuthal alignment of the stand (15),
• an indicator is displayed to indicate that the respective I-th azimuthal alignment of the stand (15) has been sufficiently assumed and/or that a determination, performed automatically by the construction laser system, of the presently assumed I-th azimuthal alignment is successfully completed, and/or
• after termination of the respective I-th calibration measurement, an indicator is displayed to indicate that
∘ the next (I+1-th) azimuthal alignment of the stand is intended to be assumed,
∘ all of the N calibration measurements are complete, in particular in addition with supplementary indication of whether the stored calibration data can be checked on the basis of the N calibration measurements performed sufficiently profoundly and possibly updated with sufficient accuracy for the beam leveling functionality to meet a predetermined accuracy requirement.

7. Construction laser system according to any one of the preceding claims,
**characterized in that**
a motorized rotatable platform is provided for accommodating the rotating laser (10), which platform is actuated by the evaluation and control unit (16) as part of the recalibration functionality in such a way that, for every I-th of the N calibration measurements, the rotating laser (10), automatically controlled, is brought into the I-th azimuthal alignment of the stand (15) via rotation of the platform, in particular wherein the platform is designed in such a way that a minimum error in respect of leveling of the platform can be ensured for a rotation and in particular the rotation is also subject to a minimum couple unbalance.

8. Construction laser system according to any one of the preceding claims,
**characterized in that**,
as part of the recalibration functionality, for every I-th of the N calibration measurements, automatically controlled by the evaluation and control unit (16), the output signal reception mode is switched on
• triggered by a user input,
• triggered by a defined time clock signal and/or
• triggered by the construction laser system, in particular the rotating laser and/or laser receiver, establishing that a defined event has occurred.

9. Construction laser system according to Claim 8, wherein the output signal reception mode can be switched on depending on the construction laser system establishing that a defined event has occurred,
**characterized in that**,
as part of the recalibration functionality, for every I-th of the N calibration measurements, automatically controlled by the evaluation and control unit (16), on the basis of an output of the leveling sensor, a present keep-steady state of the rotating laser (10) is measured continuously and, in the event of a defined keep-steady threshold value being maintained, a signal is generated, by means of which switch-on of the output signal reception mode is enabled, in particular wherein as a result the output signal reception mode is switched on directly.

10. Construction laser system according to Claim 8 or 9, wherein the output signal reception mode can be switched on depending on the construction laser system establishing that a defined event has occurred,
**characterized in that**
the laser receiver (20)
• has a motion sensor, in particular an acceleration sensor, a rotation rate sensor and/or an inclination or leveling sensor,
• has an internal functionality for continuous measurement of a present keep-steady state of the laser receiver (20),
• is designed to generate a signal which is dependent on a defined keep-steady threshold value being maintained and
• is designed to transmit, via the communication means (19,29), the signal (24) from the laser receiver (20) to the evaluation and control unit (16), and,
as part of the recalibration functionality, for every I-th of the N calibration measurements, automatically controlled by the evaluation and control unit, on the basis of reception of the signal (24), switch-on of the output signal reception mode is enabled, in particular wherein as a result the output signal reception mode is switched on directly.

11. Construction laser system according to any one of the preceding claims,
**characterized in that**
the laser receiver (20) is designed to continuously transmit, via the communication means (19,29), output signals (24) after impingement of the laser beam (14) on the laser beam detector (21) and/or to transmit, via the communication means (19,29), in event-controlled fashion, output signals (24) after impingement of the laser beam (14), wherein the transmission is triggerable
• by a user input,
• by a defined time clock signal or
• by the construction laser system, in particular the rotating laser and/or the laser receiver, establishing that a defined event has occurred.

12. Construction laser system according to any one of the preceding claims,
**characterized in that**,
as part of the recalibration functionality, for every I-th of the N calibration measurements, automatically controlled by the evaluation and control unit (16), in the output signal reception mode in each case a plurality of output signals (24) incoming via the communication means (19,29) are detected and
• averaging is performed over these output signals and an averaged value is stored as the I-th output signal (24) or
• many I-th output signals (24) are stored, wherein the evaluation and control unit (16) then reads the corresponding many I-th impingement positions from the respective many I-th output signals (24) and evaluates said impingement positions, averaged, in each case in pairs correlated with the respective I-th azimuthal alignments.

13. Rotating laser (10) for use as part of the construction laser system according to any one of the preceding claims, comprising at least
• a laser unit (11) and a continuously rotatable deflection means (12), for emitting a rotating laser beam (14) in such a way that the rotating laser beam (14) defines a reference area,
• a calibrated beam leveling functionality, in particular a beam self-leveling functionality, for which purpose the rotating laser (10) furthermore has
∘ a leveling sensor,
∘ a mechanism for at least slightly tilting the axis of rotation (13) relative to a stand (15) of the rotating laser (10), and
∘ a memory with such calibration data relating to an interaction of the leveling sensor and the mechanism that, via the calibration data, depending on an output of the leveling sensor, the mechanism can be actuated in a defined manner and thus the axis of rotation (13) can be tilted in a targeted manner in such a way that the rotating laser beam (14) spans a horizontal plane,
• an evaluation and control unit (16), and
• a communication interface (19) for receiving an output signal (24) which can be generated by a laser receiver (20) on which the rotating laser beam (14) impinges and which is dependent on the laser beam impingement position,
**characterized in that**
by the evaluation and control unit (16), an at least partially automatically running recalibration functionality for the beam leveling functionality is provided, wherein, for the recalibration functionality, a sequence of N calibration measurements is defined, where N is greater than or equal to three, which calibration measurements are to be implemented by the rotating laser and the laser receiver (20) with a respective I-th azimuthal alignment of the stand (15), where I is continuously from one to N, and with an in the process unchanged position of the laser receiver (20), and wherein, as part of the recalibration functionality,
• for every I-th of the N calibration measurements, automatically controlled by the evaluation and control unit (16),
∘ the rotating laser (10), using the beam leveling functionality, emits the rotating laser beam (14), and
∘ in an output signal reception mode, an output signal (24) incoming via the communication interface (19) is detected by the evaluation and control unit (16) and is stored as I-th output signal (24),
• the evaluation and control unit (16) automatically
∘ reads the corresponding I-th impingement positions from the respective I-th output signals (24),
∘ evaluates these impingement positions in pairs correlated with the respective I-th azimuthal alignments, and
∘ on the basis of this, checks and in particular possibly updates the stored calibration data.

14. Method for recalibrating a beam leveling functionality of a rotating laser (10) with the aid of a laser receiver (20), wherein the rotating laser (10) is designed for emitting a laser beam (14) rotating about an axis of rotation (13) in such a way that the rotating laser beam (14) defines a reference area, and has
• a laser unit (11) and a continuously rotatable deflection means (12), and
• the beam leveling functionality, in particular beam self-leveling functionality, and for this purpose furthermore has
∘ a leveling sensor,
∘ a mechanism for at least slightly tilting the axis of rotation (13) relative to a stand (15) of the rotating laser (10), and
∘ a memory with such calibration data relating to an interaction of the leveling sensor and the mechanism that, via the calibration data, depending on an output of the leveling sensor, the mechanism can be actuated in a defined manner and thus the axis of rotation (13) can be tilted in a targeted manner in such a way that the rotating laser beam (14) spans a horizontal plane,
and wherein the laser receiver (20) is equipped with a laser beam detector (21) which extends at least over a one-dimensional region on the laser receiver (20), with the result that the laser receiver (20) is designed to generate an output signal (24) depending on an impingement of the laser beam (14) on the laser beam detector (21),
**characterized by**
a sequence of N calibration measurements, where N is greater than or equal to three, which calibration measurements are implemented by the rotating laser (10) and the laser receiver (20) with a respective I-th azimuthal alignment of the stand (15), where I is continuously from one to N, and with an in the process unchanged position of the laser receiver (20), wherein, for every I-th of the N calibration measurements, automatically by means of the rotating laser (10),
• using the beam leveling functionality the rotating laser beam (14) is emitted, and
• in an output signal reception mode, an incoming output signal (24) of the laser receiver (20) is detected and is stored as I-th output signal (24), and the steps also performed automatically by the rotating laser (10) of
• reading the corresponding I-th impingement positions from the respective I-th output signals (24),
• evaluating said impingement positions, wherein the evaluation takes place in pairs correlated with the respective I-th azimuthal alignments, and
• checking and possibly updating the stored calibration data on the basis of a result of the evaluation.

15. Computer program product comprising program code which is stored on a machine-readable storage medium and contains stored information items relating to a sequence of N calibration measurements, where N is greater than or equal to three, which calibration measurements are implemented by the rotating laser (10) and the laser receiver (20) with a respective I-th azimuthal alignment of the stand (15), where I is continuously from one to N, and with an in the process unchanged position of the laser receiver (20),
for implementing the method according to Claim 14, in particular when the program is run on an electronic data processing unit, specifically wherein the electronic data processing unit is used as control and evaluation unit (16) of the construction laser system according to any one of Claims 1 to 12 or as control and evaluation unit (16) of the rotating laser (10) according to Claim 13.

## Revendications

1. Système de laser de construction, avec au moins
• un laser rotatif (10), comportant une unité de laser (11) et un moyen de déviation (12) pouvant tourner en continu, pour l'émission d'un rayon laser (14) tournant autour d'un axe de rotation (13) de telle sorte que le rayon laser (14) rotatif définit une surface de référence, le laser rotatif (10) étant doté d'une fonctionnalité de calage horizontal de rayon étalonnée, en particulier une fonctionnalité d'auto-calage horizontal de rayon, et comportant pour cela également
∘ un capteur de calage horizontal,
∘ un mécanisme destiné au basculement au moins faible de l'axe de rotation (13) relativement à une base stationnaire (15) du laser rotatif (10), ainsi
∘ qu'une mémoire avec des données d'étalonnage concernant une coopération du capteur de calage horizontal et du mécanisme telles que, par le biais des données d'étalonnage, en fonction d'une sortie du capteur de calage horizontal, le mécanisme peut être piloté de façon définie et de ce fait l'axe de rotation (13) peut être basculé de façon ciblée de telle sorte que le rayon laser (14) rotatif définit un plan horizontal,
• avec au moins un récepteur laser (20) avec un détecteur de rayon laser (21) sensible à la position s'étendant au moins sur une zone unidimensionnelle sur le récepteur laser (20) de telle sorte que le récepteur laser (20) est constitué pour la production d'un signal de sortie en fonction d'une position d'impact du rayon laser (14) sur le détecteur de rayon laser (21),
• avec au moins une unité d'analyse et de commande (16) et
• des moyens de communication (19, 29) destinés à la transmission du signal de sortie (24) à partir du récepteur laser (20) vers l'unité d'analyse et de commande (16),
**caractérisé en ce que**
l'unité d'analyse et de commande (16) fournit une fonctionnalité de réétalonnage se déroulant au moins partiellement de façon automatique pour la fonctionnalité de calage horizontal de rayon, où, pour la fonctionnalité de réétalonnage, un processus de N mesures d'étalonnage, où N est supérieur ou égal à trois, est défini, mesures qui doivent être effectuées dans une I-ième orientation azimutale respective de la base stationnaire (15), où I va en continu de un jusqu'à N, et dans une position inchangée en l'occurrence du récepteur laser (20) avec le laser rotatif (10) et le récepteur laser (20), et où, dans le cadre de la fonctionnalité de réétalonnage,
• pour chaque I-ième des N mesures d'étalonnage, de façon commandée automatiquement par l'unité d'analyse et de commande (16),
∘ le laser rotatif - en utilisant la fonctionnalité de calage horizontal de rayon - émet le rayon laser (14) rotatif et,
∘ dans un mode de réception de signal de sortie, un signal de sortie (24) entrant par le biais des moyens de communication (19, 29) est détecté par l'unité d'analyse et de commande (16) et est enregistré en tant que I-ième signal de sortie (24),
• l'unité d'analyse et de commande extrait automatiquement,
o à partir des I-ièmes signaux de sortie (24) respectifs, les I-ièmes positions d'impact correspondantes,
∘ les analyse de façon corrélée par paires avec les I-ièmes orientations azimutales respectives et,
∘ à l'aide de cela, contrôle les données d'étalonnage enregistrées et en particulier les actualise éventuellement.

2. Système de laser de construction selon la revendication 1,
**caractérisé en ce que**
le processus des N mesures d'étalonnage pour la fonctionnalité de réétalonnage est défini de telle sorte que les I-ièmes orientations azimutales respectives recouvrent au moins une quantité de différentes orientations azimutales prédéfinies de façon fixe de la base stationnaire (15) relativement à une direction dans laquelle le récepteur laser (20) se trouve du point de vue du laser rotatif (10).

3. Système de laser de construction selon l'une des revendications précédentes,
**caractérisé en ce que**
le système de laser de construction dispose d'une fonctionnalité destinée à la détermination de direction pour la détermination d'une direction actuelle par rapport au récepteur laser (20) du point de vue du laser rotatif (10) en tant que direction de récepteur laser, et **en ce que**, dans le cadre de la fonctionnalité de réétalonnage pour chaque I-ième des N mesures d'étalonnage, de façon commandée automatiquement par l'unité d'analyse et de commande (16), une I-ième direction de récepteur laser est définie en utilisant la fonctionnalité de détermination de direction et, respectivement par ce biais, la I-ième orientation azimutale du laser rotatif (10) relativement à la direction de récepteur laser est dérivée.

4. Système de laser de construction selon l'une des revendications 1 ou 2,
**caractérisé en ce que**
le processus des N mesures d'étalonnage pour la fonctionnalité de réétalonnage est défini de telle sorte que chaque I-ième orientation azimutale de la base stationnaire (15) relativement à une direction dans laquelle le récepteur laser (20) se trouve du point de vue du laser rotatif (10) est prédéfinie de façon fixe.

5. Système de laser de construction selon l'une des revendications précédentes,
**caractérisé en ce que**
le processus est défini avec N, supérieur ou égal à 4, mesures d'étalonnage, et les orientations azimutales devant en l'occurrence être respectivement adoptées sont réparties avec une symétrie de rotation sur toute la périphérie d'une rotation azimutale de la base stationnaire (15), le processus avec N égal à 4 mesures d'étalonnage étant en particulier défini, et les orientations azimutales devant en l'occurrence être respectivement adoptées étant respectivement distantes de 90°.

6. Système de laser de construction selon l'une des revendications précédentes,
**caractérisé en ce**
**qu'**il existe des moyens de sortie destinés à la sortie d'indicateurs visuels qui, dans le cadre de la fonctionnalité de réétalonnage, sont pilotés par l'unité d'analyse et de commande (16) de telle sorte qu'un utilisateur est de ce fait guidé par le processus de N mesures d'étalonnage, en particulier
• un indicateur étant affiché à la demande de l'utilisateur en vue du changement et de l'adoption de la I-ième orientation azimutale respective de la base stationnaire (15),
• un indicateur étant affiché à titre d'indication que la I-ième orientation azimutale respective de la base stationnaire (15) est suffisamment adoptée et/ou qu'une détermination, intervenant automatiquement côté système de laser de construction, de la I-ième orientation azimutale actuellement adoptée est terminée avec succès, et/ou
• à la fin de la I-ième mesure d'étalonnage respective, un indicateur est affiché à titre d'indication que
∘ la (I+1-ième) orientation azimutale suivante de la base stationnaire doit être adoptée,
∘ toutes les N mesures d'étalonnage sont terminées, en particulier avec en outre l'indication complémentaire montrant si les données d'étalonnage enregistrées peuvent être contrôlées de façon suffisamment profonde à l'aide des N mesures d'étalonnage effectuées et éventuellement être actualisées avec une précision suffisante de telle sorte que la fonctionnalité de calage horizontal de rayon respecte une exigence de précision prédéfinie.

7. Système de laser de construction selon l'une des revendications précédentes,
**caractérisé en ce que,**
pour la réception du laser rotatif (10), il est prévu une plateforme rotative motorisée qui est pilotée par l'unité d'analyse et de commande (16) dans le cadre de la fonctionnalité de réétalonnage de telle sorte que, pour chaque I-ième des N mesures d'étalonnage, le laser rotatif (10) est, commandé de façon automatique, amené, via la rotation de la plateforme, dans la I-ième orientation azimutale de la base stationnaire (15),
la plateforme étant en particulier constituée de telle sorte que, pour une rotation, une erreur minimale concernant une horizontalité de la plateforme est garantie, et en particulier la rotation est également affectée par une erreur de nutation minimale.

8. Système de laser de construction selon l'une des revendications précédentes,
**caractérisé en ce que**
dans le cadre de la fonctionnalité de réétalonnage, pour chaque I-ième des N mesures d'étalonnage, de façon commandée automatiquement par l'unité d'analyse et de commande (16), le mode de réception de signal de sortie est mis en circuit,
• déclenché par une entrée d'utilisateur,
• déclenché par un signal de référence d'horloge défini et/ou
• déclenché par une constatation, côté système de laser de construction, en particulier côté laser rotatif et/ou côté récepteur laser, qu'un événement défini est survenu.

9. Système de laser de construction selon la revendication 8, le mode de réception de signal de sortie pouvant être mis en circuit en fonction d'une constatation, côté système de laser de construction, qu'un événement défini est survenu,
**caractérisé en ce que,**
dans le cadre de la fonctionnalité de réétalonnage, pour chaque I-ième des N mesures d'étalonnage, de façon commandée automatiquement par l'unité d'analyse et de commande (16), un état d'immobilité actuel du laser rotatif (10) est mesuré en continu à l'aide d'une sortie du capteur de calage horizontal et, en cas de respect d'une valeur de seuil d'immobilité définie, un signal est produit par lequel une validation de la mise en circuit du mode de réception de signal de sortie est effectuée, le mode de réception de signal de sortie étant en particulier de ce fait mis en circuit directement.

10. Système de laser de construction selon la revendication 8 ou 9, le mode de réception de signal de sortie pouvant être mis en circuit en fonction d'une constatation, côté système de laser de construction, qu'un événement défini est survenu,
**caractérisé en ce que**
le récepteur laser (20)
• comporte un capteur de mouvement, en particulier un capteur d'accélération, un capteur de vitesse de rotation et/ou un capteur d'inclinaison ou de calage horizontal,
• dispose d'une fonctionnalité interne destinée à la mesure en continu d'un état d'immobilité actuel du récepteur laser (20),
• est constitué pour la production d'un signal qui dépend d'un respect d'une valeur de seuil d'immobilité définie, et
• est constitué pour la transmission, intervenant par le biais des moyens de communication (19, 29), du signal (24) du récepteur laser (20) vers l'unité d'analyse et de commande (16),
et,
dans le cadre de la fonctionnalité de réétalonnage, pour chaque I-ième des N mesures d'étalonnage, de façon commandée automatiquement par l'unité d'analyse et de commande, à l'aide d'une obtention du signal (24), une validation de la mise en circuit du mode de réception de signal de sortie est effectuée, le mode de réception de signal de sortie étant en particulier de ce fait mis en circuit directement.

11. Système de laser de construction selon l'une des revendications précédentes,
**caractérisé en ce que**
le récepteur laser (20) est constitué pour l'émission en continu - intervenant par le biais des moyens de communication (19, 29) - de signaux de sortie (24) après l'arrivée du rayon laser (14) sur le détecteur de rayon laser (21) et/ou pour l'émission commandée par événements - et intervenant par le biais des moyens de communication (19, 29) - de signaux de sortie (24) après l'arrivée du rayon laser (14), l'émission pouvant être déclenchée par
• par une entrée utilisateur,
• par un signal de référence de temps défini ou
• par une constatation, côté système de laser de construction, en particulier côté laser rotatif et/ou côté récepteur laser, qu'un événement défini est survenu.

12. Système de laser de construction selon l'une des revendications précédentes,
**caractérisé en ce que,**
dans le cadre de la fonctionnalité de réétalonnage, pour chaque I-ième des N mesures d'étalonnage, de façon commandée automatiquement par l'unité d'analyse et de commande (16), dans le mode de réception de signal de sortie, respectivement plusieurs signaux de sortie (24) entrant par le biais des moyens de communication (19, 29) sont détectés et
• la moyenne est calculée sur ceux-ci et une valeur moyennée est enregistrée en tant que I-ième signal de sortie (24) ou
• sont enregistrés en tant que nombreux I-ièmes signaux de sortie (24), l'unité d'analyse et de commande (16) extrayant par la suite, à partir des nombreux I-ièmes signaux de sortie (24) respectifs, les nombreuses I-ièmes positions d'impact correspondantes et les analysant de façon moyennée respectivement par paires, de manière corrélée, avec les I-ièmes orientations azimutales respectives.

13. Laser rotatif (10) destiné être utilisé en tant que partie dans le système de laser de construction selon l'une des revendications précédentes, avec au moins
• une unité de laser (11) et un moyen de déviation (12) pouvant tourner en continu, pour l'émission d'un rayon laser (14) de telle sorte que le rayon laser (14) rotatif définit une surface de référence,
• une fonctionnalité de calage horizontal de rayon étalonnée, en particulier une fonctionnalité d'auto-calage horizontal, le laser rotatif (10) comportant également pour cela
∘ un capteur de calage horizontal,
∘ un mécanisme destiné au basculement au moins faible de l'axe de rotation (13) relativement à une base stationnaire (15) du laser rotatif (10), ainsi
∘ qu'une mémoire avec des données d'étalonnage concernant une coopération du capteur de calage horizontal et du mécanisme telles que, par le biais des données d'étalonnage, en fonction d'une sortie du capteur de calage horizontal, le mécanisme peut être piloté de façon définie et de ce fait l'axe de rotation (13) peut être basculé de façon ciblée de telle sorte que le rayon laser (14) définit un plan horizontal,
• une unité d'analyse et de commande (16) et
• une interface de communication (19) destinée à la réception d'un signal de sortie (24), dépendant de la position d'impact du rayon laser, pouvant être produit par un récepteur laser (20) heurté par le rayon laser (14) rotatif,
**caractérisé en ce que**
l'unité d'analyse et de commande (16) fournit une fonctionnalité de réétalonnage se déroulant au moins partiellement de façon automatique pour la fonctionnalité de calage horizontal de rayon, où, pour la fonctionnalité de réétalonnage, un processus de N mesures d'étalonnage, où N est supérieur ou égal à trois, est défini, qui doivent être effectuées dans une I-ième orientation azimutale respective de la base stationnaire (15), où I va en continu de un jusqu'à N, et dans une position inchangée en l'occurrence du récepteur laser (20) avec le laser rotatif (10) et le récepteur laser (20), et où, dans le cadre de la fonctionnalité de réétalonnage
• pour chaque I-ième des N mesures d'étalonnage, de façon commandée automatiquement par l'unité d'analyse et de commande (16),
∘ le laser rotatif - en utilisant la fonctionnalité de calage horizontal de rayon - émet le rayon laser (14) rotatif et,
∘ dans un mode de réception de signal de sortie, un signal de sortie (24) entrant par le biais des moyens de communication (19, 29) est détecté par l'unité d'analyse et de commande (16) et est enregistré en tant que I-ième signal de sortie (24),
• l'unité d'analyse et de commande extrait automatiquement,
∘ à partir des I-ièmes signaux de sortie (24) respectifs, les I-ièmes positions d'impact correspondantes,
∘ les analyse, de façon corrélée, par paires avec les I-ièmes orientations azimutales respectives et,
∘ à l'aide de cela, contrôle les données d'étalonnage enregistrées et en particulier les actualise éventuellement.

14. Procédé de réétalonnage d'une fonctionnalité de calage horizontal de rayon d'un laser rotatif (10) à l'aide d'un récepteur laser (20), le laser rotatif (10) étant constitué pour l'émission d'un rayon laser (14) tournant autour d'un axe de rotation (13) de telle sorte que le rayon laser (14) rotatif définit une surface de référence, et présentant
• une unité de laser (11) et un moyen de déviation (12) pouvant tourner en continu et
• la fonctionnalité de calage horizontal de rayon, en particulier la fonctionnalité d'auto-calage horizontal, et comportant pour cela également
∘ un capteur de calage horizontal,
∘ un mécanisme destiné au basculement au moins faible de l'axe de rotation (13) relativement à une base stationnaire (15) du laser rotatif (10), ainsi
∘ qu'une mémoire avec des données d'étalonnage concernant une coopération du capteur de calage horizontal et du mécanisme telles que, par le biais des données d'étalonnage, en fonction d'une sortie du capteur de calage horizontal, le mécanisme peut être piloté de façon définie et de ce fait l'axe de rotation (13) peut être basculé de façon ciblée de telle sorte que le rayon laser (14) définit un plan horizontal,
et le récepteur laser (20) étant équipé d'un détecteur de rayon laser (21) s'étendant au moins sur une zone unidimensionnelle sur le récepteur laser (20) de telle sorte que le récepteur laser (20) est constitué pour la production d'un signal de sortie en fonction d'un impact du rayon laser (14) sur le détecteur de rayon laser (21),
**caractérisé par**
un processus de N mesures d'étalonnage, où N est supérieur ou égal à trois, qui sont effectuées dans une I-ième orientation azimutale respective de la base stationnaire (15), où I va en continu de un jusqu'à N, et dans une position inchangée en l'occurrence du récepteur laser (20) avec le laser rotatif (10) et le récepteur laser (20), où, pour chaque I-ième des N mesures d'étalonnage, de façon automatique du côté du laser rotatif (10),
• le rayon laser (14) rotatif est émis en utilisant la fonctionnalité de calage horizontal de rayon, et,
• dans un mode de réception de signal de sortie, un signal de sortie (24) entrant du récepteur laser (20) est détecté et est enregistré en tant que I-ième signal de sortie (24),
ainsi que les étapes intervenant en outre automatiquement du côté du laser rotatif (10)
• extraction des I-ièmes positions d'impact correspondantes à partir des I-ièmes signaux de sortie (24) respectifs,
• analyse de celles-ci, l'analyse s'effectuant par paires, de façon corrélée, avec les I-ièmes orientations azimutales respectives, et
• contrôle et éventuellement actualisation des données d'étalonnage enregistrées à l'aide d'un résultat de l'analyse.

15. Produit de programme informatique avec code de programme qui est enregistré sur un support lisible par machine et qui contient des informations enregistrées sur un processus de N mesures d'étalonnage, où N est supérieur ou égal à trois, qui sont effectuées dans une I-ième orientation azimutale respective de la base stationnaire (15), où I va en continu de un jusqu'à N, et dans une position inchangée en l'occurrence du récepteur laser (20) avec le laser rotatif (10) et le récepteur laser (20),
pour la réalisation du procédé selon la revendication 14, en particulier quand le programme est exécuté sur une unité de traitement de données électronique, l'unité de traitement de données électronique servant spécialement d'unité d'analyse et de commande (16) du système de laser de construction selon l'une des revendications 1 à 12 ou d'unité d'analyse et de commande (16) du laser rotatif (10) selon la revendication 13.
